# EUROPÄISCHE PATENTSCHRIFT

(11) **EP 1 771 941 B1**
(45) Veröffentlichungstag und Bekanntmachung des Hinweises auf die Patenterteilung: **04.05.2011**
(21) Anmeldenummer: 05773753.8
(22) Anmeldetag: 16.07.2005
(51) Int. Cl.: H02P 6/18

(54) **CHIRURGISCHE MASCHINE UND VERFAHREN ZUM STEUERN UND/ODER REGELN EINER CHIRURGISCHEN MASCHINE**
SURGICAL MACHINE AND METHOD FOR CONTROLLING AND/OR REGULATING ONE SUCH SURGICAL MACHINE
MACHINE CHIRURGICALE ET PROCEDE POUR COMMANDER ET/OU REGLER UNE MACHINE CHIRURGICALE

(30) Priorität: 30.07.2004 DE 102004038415
(43) Veröffentlichungstag der Anmeldung: 11.04.2007
(73) Patentinhaber: Aesculap AG, 78532 Tuttlingen (DE)
(72) Erfinder: SCHNEIDER, Jürgen, 78532 Tuttlingen (DE); HÖGERLE, Roland, Alois, 78532 Tuttlingen (DE); KONRATH, Harald, 72108 Rottenburg-Hailfingen (DE)
(74) Vertreter: Hoeger, Stellrecht & Partner Patentanwälte
(86) Internationale Anmeldenummer: PCT/EP2005/007759
(87) Internationale Veröffentlichungsnummer: WO 2006/012990

(56) Entgegenhaltungen:
- US-A- 5 689 159
- US-A- 5 994 867
- US-A- 6 086 544
- YING-YU TZOU; HAU-JEAN HSU; TIEN-SUNG KUO;: "FPGA-based SVPWM control IC for 3-phase PWM inverters" PROCEEDINGS OF THE 22ND INTERNATIONAL CONFERENCE ON INDUSTRIAL ELECTRONICS, CONTROL, AND INSTRUMENTATION, August 1996 (1996-08), Seiten 138-143, XP002360956

## Beschreibung

Die vorliegende Erfindung betrifft eine chirurgische Maschine mit einem sensorlosen Elektromotor, welcher einen Rotor und mindestens zwei Motorwicklungen aufweist, und mit einer Motorsteuerung zum Steuern und/oder Regeln des Elektromotors.

Ferner betrifft die vorliegende Erfindung ein Verfahren zum Steuern und/oder Regeln einer chirurgischen Maschine mit einem sensorlosen Elektromotor, welcher einen Rotor und mindestens zwei Motorwicklungen aufweist, und mit einer Motorsteuerung zum Steuern und/oder Regeln des Elektromotors.

In der Chirurgie werden zunehmend Maschinen mit einer netzunabhängigen Energieversorgung eingesetzt. Dies hat zur Folge, daß bei üblicherweise als Energieversorgungen eingesetzten Batterien oder Akkumulatoren Umrichterschaltungen vorgesehen werden müssen, um aus von den Energieversorgungen bereitgestellten Gleichspannungen zum Betreiben eines Elektromotors mit mehreren, in der Regel drei Motorwicklungen erforderliche zeitabhängige Spannungs- und Stromverläufe bereitzustellen.

Aufgrund der netzunabhängigen Energieversorgung muß der Elektromotor elektronisch kommutiert werden. Allerdings ergeben sich insbesondere bei kleinen Motordrehzahlen, das heißt bei Drehzahlen von weniger als 1000 Umdrehungen pro Minute, erhöhte Anforderungen an die Motorsteuer- und/oder -regelung. Da ferner hohe Ansprüche an ein optimales Anlaufverhalten des Motors unter Last sowie an dessen Dynamik gestellt werden und gleichzeitig in jedem Arbeitspunkt der bestmögliche Wirkungsgrad erreicht werden soll, ist es erforderlich, die Position oder Lage des üblicherweise durch einen Magneten gebildeten Rotors des Motors zu bestimmen. Erst die genaue Rotorposition ermöglicht es, die als Motor- oder Statorwicklungen bezeichneten Spulen zum geforderten Kommutierungszeitpunkt bestimmungsgemäß bestromen zu können.

Es ist bekannt, zur Positionserkennung Sensorsysteme einzusetzen, beispielsweise digitale oder analoge. Hall-Systeme. Nachteilig bei diesen Ausführungen ist, daß Positionssensoren in den Motor integriert und mit der Motorsteuerung verbunden werden müssen. Es müssen folglich für jeden Positionssensor entsprechende Kontakte vorgesehen werden, wenn die Motorsteuerung nicht fest mit dem Elektromotor verbunden ist. Dies kann zu Kontaktkorrosion beim Reinigen, insbesondere beim Sterilisieren der Maschine führen, und im schlimmsten Fall die Maschine außer Betrieb setzen.

Ferner ist es bekannt, für Anwendungen, bei denen keine hohen Anforderungen an die Dynamik, das Anlaufmoment und die Motorqualität im Bereich kleiner Motordrehzahlen gestellt werden, sensorlose Rotorpositionserkennungsverfahren zu nutzen. Da bei herkömmlichen elektronischen Kommutierungsverfahren für Elektromotoren stets eine Motorwicklung nicht bestromt wird, wird zur Ermittlung einer Ist-Motordrehzahl, die Gegen-EMK (Elektro-Motorische-Kraft) an der nicht bestromten Motorwicklung gemessen und ausgewertet.

Die oben beschriebenen, bekannten Steuer- und Regelungsvertahren für chirurgische Maschinen erfordern entweder einen erhöhten schaltungstechnischen Aufwand und zusätzliche Bauteile, insbesondere Sensorsysteme mit Positionssensoren, oder sind nicht geeignet, den Elektromotor aus dem Stillstand unter Last gezielt anlaufen zu lassen und auch bei sehr niedrigen Drehzahlen mit hoher Laufruhe zu betreiben.

Eine chirurgische Maschine und ein chirurgisches Verfahren der eingangs beschriebenen Art sind aus der US 5,689,159 bekannt. Die US 6,086,544 offenbart eine Steuervorrichtung für eine automatische chirurgische Biopsievorrichtung. Aus der US 5,994,867 sind ein Verfahren sowie eine Vorrichtung zur Steuerung einer sensorlosen Asynchronmaschine bekannt. Und schließlich wird in dem Artikel "FPGA-Based SVPWM control IC for 3-Phase PWM Inverters", proceedings of the 26. International Conference and Industrial Electronics, Control, and Instrumentation, August 1996, Seiten 138 bis 143, ein integrierter Steuerungsschaltkreis für 3-Phasen-PWM-Wandler offenbart.

Es ist daher Aufgabe der vorliegenden Erfindung, eine chirurgische Maschine und ein Verfahren zum Steuern und/oder Regeln einer chirurgischen Maschine der eingangs beschriebenen Art so zu verbessern, daß der Elektromotor mit optimalem Wirkungsgrad bei kleinen Drehzahlen betreibbar ist sowie ein bestimmungsgemäßer Motoranlauf auch unter Last ermöglicht wird.

Diese Aufgabe wird bei einer chirurgischen Maschine der eingangs beschriebenen Art nach Anspruch 1 dadurch gelöst, daß mit der Motorsteuerung ein Space-Vektor-Puls-Weiten-Modulations-(SVPWM)-Verfahren zum Steuern und/oder Regeln des Elektromotors durchführbar ist, bei welchem alle Motorwicklungen gleichzeitig bestrombar sind, daß zur Steuer- und/oder Regelung einer Bestromung der mindestens zwei Motorwicklungen eine Rotorposition des Elektromotors bestimmbar ist, daß zur Bestimmung der Rotorposition des Elektromotors mindestens eine der mindestens zwei Motorwicklungen für ein Zeitintervall t_{unterbrechung} von einer Energieversorgung der Maschine trennbar ist, daß während des Intervalls t_{unterbrechung} eine Gegen-EMK der mindestens einen der mindestens zwei Motorwicklungen messbar ist und daß aus der gemessenen Gegen-EMK eine Ist-Position des Rotors berechenbar ist.

Die Motorsteuerung so auszubilden, daß die chirurgische Maschine mittels Space-Vektor-Puls-Weiten-Modulations-(SVPWM)-Verfahren gesteuert und/oder geregelt werden kann, verbessert insbesondere den Motoranlauf und dessen Betrieb bei kleinen Drehzahlen. Grund hierfür ist insbesondere, daß, anders als bei einem herkömmlichen Puls-Weiten-Modulations-(PWM)-Verfahren, alle Motorwicklungen gleichzeitig bestromt werden. Dies bedeutet insbesondere bei einem Elektromotor mit drei Motorwicklungen, daß nicht nur zwei, sondern alle drei Motorwicklungen bestromt werden. Bei drei Motorwicklungen können so jeweils 60°-Phasen einer Rotorbewegung des Elektromotors relativ zu den Motorwicklungen stufenlos variiert werden. Bei herkömmlicher beziehungsweise bislang angewandten Puls-Weiten-Modulations-(PWM)-Verfahren konnte ein Feldwinkel des Statorfeldes nicht stufenlos, sondern nur in 60°-Schritten geändert werden. Vor allem bei niedrigen Drehzahlen kann so ein wesentlich ruhigerer Motorlauf erreicht werden. Ferner läßt sich das Anlaufen des Motors unabhängig von einer Rotorposition des Elektromotors ganz gezielt vorgeben. Grundsätzlich wäre es denkbar, auf eine Bestimmung der Rotorposition des Rotors des Elektromotors zu verzichten. Um jedoch insbesondere das Anlaufen des Elektromotors unter Last zu optimieren, ist es günstig, daß zur Steuer- und/oder Regelung einer Bestromung der mindestens zwei Rotorwicklungen eine Rotorposition des Elektromotors bestimmbar ist. Durch das Space-Vektor-Puls-Weiten-Modulations-(SVPWM)-Verfahren läßt sich bei Kenntnis der Rotorposition der Feldwinkel des durch die bestromten Motorwicklungen erzeugten Statorfeldes stufenlos so weiterschalten, daß ein optimaler Wirkungsgrad des Motors erreicht wird. Vorteilhaft ist es ferner, daß zur Bestimmung der Rotorposition des Elektromotors mindestens eine der mindestens zwei Motorwicklungen für ein Zeitintervall t_{Untenrechung} von einer Energieversorgung der Maschine trennbar ist, daß während des Zeitintervalls t_{Unterbrechung} eine Gegen-EMK der mindestens einen der mindestens zwei Motorwicklungen meßbar ist, und daß aus der gemessenen Gegen-EMK eine Ist-Position des Rotors berechenbar ist. Mit anderen Worten bedeutet dies, daß die gleichzeitige Bestromung beim Space-Vektor-Puls-Weiten-Modulations-(SVPWM)-Verfahren für ein bestimmtes Zeitintervall gezielt kurz unterbrochen wird, und zwar an einer, mehreren oder allen Motorwicklungen. Während der kurzen Unterbrechung kann dann an einer, mehreren oder allen Motorwicklungen die Gegen-EMK bestimmt werden und aufgrund deren Größe auf eine Stellung des Rotors relativ zu den Motorwicklungen geschlossen werden kann.

Ein optimaler Aufbau der Maschine ergibt sich, wenn die Motorsteuerung eine Steuerungseinheit und eine Leistungseinheit umfaßt. Auf diese Weise läßt sich insbesondere eine Leistungsaufnahme der Maschine minimieren, wenn der Elektromotor stillsteht.

Eine elektronische Kommutierung läßt sich auf einfache Weise dadurch erreichen, daß die Leistungseinheit jeweils zwei Leistungstransistoren für jede der mindestens zwei Motorwicklungen umfaßt. Es lassen sich so auf einfache Weise positive und negative Spannungen bezogen auf ein Referenzpotential an die mindestens zwei Motorwicklungen anlegen, auch wenn nur eine Gleichspannungsquelle als Energieversorgung zur Verfügung steht.

Besonders wartungsfreundlich wird die Maschine, wenn der Elektromotor ein bürstenloser Gleichstrommotor ist. Insbesondere kann der Elektromotor auch elektronisch kommutiert sein.

Eine Bestimmung der Rotorposition läßt sich weiter verbessern, wenn alle Motorwicklungen gleichzeitig für das Zeitintervall t_{Unterbrechung} von der Energieversorgung der Maschine trennbar sind. Es läßt sich so gleichzeitig die Gegen-EMK an allen Motorwicklungen bestimmen, sodaß sich eventuelle Ungenauigkeiten bei der Bestimmung der Gegen-EMK an nur einer Motorwicklung folglich weniger stark auswirken.

Damit das Zeitintervall t_{Unterbrechung} möglichst kurz bleibt, ist es günstig, wenn die an den mindestens zwei Motorwicklungen anliegenden Spannungen vor oder zu Beginn des Zeitintervalls t_{Unterbrechung} oder vor der Messung der Gegen-EMK meßbar sind und wenn diejenige Motorwicklung, an welcher die niedrigste Spannung gemessen wird, mit einem vorgegebenen Spannungspotential verbindbar ist. Durch diese Ausgestaltung wird eine Zeit für das Einschwingen des Systems minimiert, das heißt, die Gegen-EMK kann nach einer minimalen Wartezeit gemessen werden.

Besonders einfach wird der Aufbau der chirurgischen Maschine, wenn das vorgegebene Spannungspotential Masse ist.

Um eine Bestimmung der Rotorposition weiter zu optimieren, ist es vorteilhaft, wenn die Motorsteuerung derart ausgebildet ist, daß die Gegen-EMK während des Zeitintervalls t_{Unterbrechung} erst nach einer Einschwingzeit t_{Einschwing} gemessen wird. Dies bedeutet mit anderen Worten, daß beispielsweise die Bestromung an mindestens einer Motorwicklung unterbrochen wird, also das Zeitintervall t_{Unterbrechung} beginnt, und erst nach der Einschwingzeit t_{Einschwing}, welche üblicherweise kürzer als das Zeitintervall t_{Unterbrechung} ist, die Gegen-EMK gemessen wird.

Um die Genauigkeit der Bestimmung der Rotorposition weiter zu verbessern, ist es günstig, wenn die Motorsteuerung derart ausgebildet ist, daß zur Bestimmung der Gegen-EMK ein Spannungsverlauf an der oder den nicht mit dem vorgegebenen Spannungspotential verbundenen Motorwicklungen meßbar ist und wenn die Einschwingzeit t_{Einschwing} mindestens der Zeit tₖₒₙₛₜₐₙₜ entspricht, bis die an der oder den nicht mit dem vorgegebenen Spannungspotential Motorwicklungen anliegenden Spannungen im Zeitverlauf konstant oder nahezu konstant sind. Diese Ausgestaltung gestattet es, die Einschwingzeit t_{Einschwing}je nach Bedarf zu variieren. Durch die Bestimmung der Zeit tₖₒₙₛₜₐₙₜ kann die Einschwingzeit t_{Einschwing} gezielt eingestellt und minimiert werden.

Vorzugsweise ist die Motorsteuerung derart ausgebildet, daß ein konstanter Wert für das Zeitintervall t_{Unterbrechung} vorgegeben ist. Es läßt sich so die Motorsteuerung wesentlich vereinfachen.

Gemäß einer alternativen Ausführungsform der Maschine kann es jedoch vorteilhaft sein, wenn die Motorsteuerung derart ausgebildet ist, daß das Zeitintervall t_{Unterbrechung} veränderbar ist. Dadurch kann insbesondere das Zeitintervall t_{Unterbrechung} vergrößert oder verkleinert werden, falls die Zeit tₖₒₙₛₜₐₙₜ länger als das zunächst vorgegebene Zeitintervall t_{Unterbrechung} ist.

Einen optimierten Betrieb der Maschine kann man erreichen, wenn die Motorsteuerung derart ausgebildet ist, daß die Dauer des Zeitintervalls t_{Unterbrechung} derart vorgebbar ist, daß während des Zeitintervalls t_{Unterbrechung} die an der oder den nicht mit dem vorgegebenen Spannungspotential verbundenen Motorwicklungen anliegenden Spannungen im Zeitverlauf einen konstanten oder nahezu konstanten Spannungswert annehmen. Insbesondere bei kurzen Abklingzeiten, das heißt, wenn die Zeit tₖₒₙₛₜₐₙₜ sehr klein ist, läßt sich das Zeitintervall t_{Unterbrechung} entsprechend anpassen, wodurch die Bestromungsunterbrechung der Motorwicklungen minimal kurz wird. Dadurch wird die Laufruhe des Motors, insbesondere bei niedrigen Drehzahlen und beim Anlaufen, verbessert.

Vorzugsweise ist die Motorsteuerung derart ausgebildet, daß das Zeitintervall t_{Unterbrechung} vergrößerbar ist, wenn die Zeit tₖₒₙₛₜₐₙₜ größer als das Zeitintervall t_{Unterbrechung} ist, und/oder daß das Zeitintervall t_{Unterbrechung} Verkleinerbar ist, wenn die Zeit tₖₒₙₛₜₐₙₜ kleiner als das Zeitintervall t_{Unterbrechung} ist. So wird sichergestellt, daß das Zeitintervall t_{Unterbrechung} nie länger als unbedingt erforderlich ist, um die Gegen-EMK für die Ermittlung der Rotorposition möglichst genau zu bestimmen.

Grundsätzlich wäre es denkbar, das Zeitintervall t_{Unterbrechung} periodisch zu variieren. Günstig ist es jedoch, wenn die Motorsteuerung derart ausgebildet ist, daß das Zeitintervall t_{Unterbrechung} pro Umdrehung schrittweise veränderbar ist. Insbesondere ist es günstig, wenn das Zeitintervall t_{Unterbrechung} Schrittweise vergrößerbar oder verkleinerbar ist. Auf diese Weise kann das Zeitintervall t_{Unterbrechung} verändert werden, bis es mindestens der Zeit tₖₒₙₛₜₐₙₜ entspricht, um die Gegen-EMK sicher und genau bestimmen zu können.

Gemäß einer bevorzugten Ausführungsform der Erfindung kann vorgesehen sein, daß die Motorsteuerung derart ausgebildet ist, daß eine Soll-Position des Rotors mit der aus der Gegen-EMK-Messung bestimmten Ist-Position des Rotors vergleichbar ist und daß ein Feldwinkel der Space-Vektor-Puls-Weiten-Modulation (SVPWM) entsprechend der ermittelten Differenz zwischen Soll- und Ist-Position des Rotors nachregelbar ist. Die Motorsteuerung bestimmt also eine Abweichung der Ist-Position von der Sollposition des Rotors und regelt aufgrund der bestimmten Positionsabweichung den Feldwinkel des durch die Motorwicklungen erzeugten Statorfeldes nach. Es kann so ein optimaler Wirkungsgrad des Motors erreicht werden.

Um die Genauigkeit bei der Bestimmung der Gegen-EMK weiter zu erhöhen, ist es vorteilhaft, wenn die Motorsteuerung derart ausgebildet ist, daß die Gegen-EMK erst meßbar ist, wenn der Motorstrom mindestens einer der mindestens zwei Motorwicklungen auf Null abgefallen ist. Es lassen sich so eventuelle, durch das Fließen eines Motorstroms bedingte Meßfehler bei der Ermittlung einer Gegen-EMK vermeiden.

Grundsätzlich wäre es denkbar, eine netzabhängige Gleichstromspannungsquelle als Energieversorgung für die chirurgische Maschine zu wählen. Besonders vorteilhaft ist es jedoch, wenn eine netzunabhängige Energieversorgung zur Energieversorgung der Maschine vorgesehen ist. Insbesondere vorteilhaft ist der Einsatz einer Batterie beziehungsweise eines Akkumulators. Denkbar wäre auch die Verwendung einer Brennstoffzelle. Die Maschine läßt sich so ohne störende Kabelverbindungen in gewünschter Weise bei chirurgischen Eingriffen verwenden.

Günstigerweise bilden die netzunabhängige Energieversorgung und die Motorsteuerung eine Einheit und ist die Einheit mit der Maschine lösbar verbindbar. Dies hat insbesondere den Vorteil, daß zu Reinigungszwecken, beispielsweise zur Sterilisierung der Maschine, alle hitze- und feuchtigkeitsempfindlichen Teile der Maschine entfernt werden können. Die Ausbildung der Motorsteuerung und der netzunabhängigen Energieversorgung als Einheit verkürzt eine Vorbereitungszeit der chirurgischen Maschine für den Einsatz.

Besonders einfach wird der Aufbau der chirurgischen Maschine, wenn der Elektromotor drei Motorwicklungen aufweist.

Gemäß einer weiteren bevorzugten Ausführungsform der Erfindung kann vorgesehen sein, daß ein Gesamtdrehzahlbereich der chirurgischen Maschine in mindestens einen unteren Drehzahlbereich für niedrige Drehzahlen und in mindestens einen oberen Drehzahlbereich für höhere Drehzahlen als der mindestens eine untere Drehzahlbereich unterteilt ist und daß die Motorsteuerung derart ausgebildet ist, daß in dem mindestens einen unteren Drehzahlbereich das Space-Vektor-Puls-Weiten-Modulations-(SVPWM)-Verfahren durchführbar ist. Eine chirurgische Maschine derart weiterzubilden, hat den Vorteil, daß je nach Drehzahlbereich am besten geeignete Steuer- und/oder Regelungsverfahren zum Steuern und/oder Regeln der chirurgischen Maschine durchgeführt werden können. Für den unteren Drehzahlbereich ist die Durchführung des Space-Vektor-Puls-Weiten-Modulations-(SVPWM)-Verfahrens günstig, da dieses Verfahren einen ruhigen Motorlauf ermöglicht, insbesondere beim Anlaufen des Motors und bei niedrigen Drehzahlen.

Ferner ist es günstig, wenn in dem mindestens einen oberen Drehzahlbereich ein zweites Verfahren zum Steuern und/oder Regeln der chirurgischen Maschine durchführbar ist, welches ein Puls-Weiten-Modulations-(PWM)-Verfahren ist. Insbesondere ein herkömmliches, dreiphasen-trägergestütztes Puls-Weiten-Modulations-(PWM)-Verfahren bei hohen Drehzahlen anstelle des Space-Vektor-Puls-Weiten-Modulations-(SVPWM)-Verfahrens durchzuführen, hat hinsichtlich des Wirkungsgrades der chirurgischen Maschine Vorteile. So wird vor allem bei höheren Drehzahlen die Bestimmung der Rotorposition beim Space-Vektor-Puls-Weiten-Modulations-(SVPWM)-Verfahren schwieriger, und zudem dämpft dieses Verfahren den Elektromotor bei hohen Drehzahlen in unerwünschter Weise, was sich wiederum negativ auf dessen Wirkungsgrad auswirkt.

Günstig ist es, wenn ein Drehzahlgrenzwert zwischen dem mindestens einen unteren und dem mindestens einen oberen Drehzahlbereich veränderbar ist. Dies bedeutet mit anderen Worten, daß zwischen einem ersten und einem zweiten Steuer- und/oder Regelungsverfahren beim Drehzahlgrenzwert umgeschaltet werden kann. Wird beispielsweise für den oberen Drehzahlbereich ein anderes Steuer- und/oder Regelungsverfahren gewünscht oder geändert, so kann dies ein unveränderlicher Drehzahlgrenzwert zum Umschalten zwischen dem unteren und dem oberen Drehzahlbereich, beispielsweise einen Wirkungsgrad der Maschine, negativ beeinflussen, so daß eine Veränderung des Drehzahlgrenzwerts positive Auswirkungen auf einen Wirkungsgrad der Maschine hat.

Gemäß einer weiteren bevorzugten Ausführungsform der Erfindung kann vorgesehen sein, daß die Motorsteuerung derart ausgebildet ist, daß eine Umschaltung vom Space-Vektor-Puls-Weiten-Modulations-(SVPWM)-Verfahren in das Puls-Weiten-Modulations-(PWM)-Verfahren bei einer ersten Umschaltdrehzahl erfolgt und daß eine Umschaltung vom Puls-Weiten-Modulations-(PWM)-Verfahren in das Space-Vektor-Puls-Weiten-Modulations-(SVPWM)-Verfahren bei einer zweiten Umschaltdrehzahl erfolgt. Beispielsweise kann die erste Umschaltdrehzahl einen höheren Wert aufweisen als die zweite Umschaltdrehzahl, so daß dadurch verhindert werden kann, daß bei einem Betrieb der chirurgischen Maschine im Bereich der Umschaltdrehzahl ein ständiges Umschalten zwischen unterschiedlichen Steuer- und/oder Regelungsverfahren erfolgt. Ein ruhiger Motorlauf, insbesondere im Grenzbereich, wäre dann nicht mehr zu gewährleisten. Im beschriebenen Fall ergibt sich eine Art Hysterese beim Hochfahren der Drehzahl und beim Herunterfahren der Drehzahlen, so daß bei Drehzahlen zwischen den beiden Umschaltdrehzahlen je nach Situation entweder das eine oder das andere Steuer- und/oder Regelungsverfahren durchgeführt wird.

Grundsätzlich wäre es denkbar, die chirurgische Maschine so auszubilden, daß eine Umschaltung zwischen unterschiedlichen Steuer- und/oder Regelungsverfahren manuell erfolgen kann. Vorzugsweise ist die Motorsteuerung jedoch derart ausgebildet, daß die Umschaltung vom Space-Vektor-Puls-Weiten-Modulations-(SVPWM)-Verfahren in das Puls-Weiten-Modulations-(PWM)-Verfahren beim Übergang vom mindestens einen unteren in den mindestens einen oberen Drehzahlbereich, und umgekehrt, automatisch erfolgt. Eine Bedienperson der Maschine kann sich dann ganz auf deren chirurgische Anwendung konzentrieren und muß sich nicht um die Umschaltung vom unteren in den oberen Drehzahlbereich, und umgekehrt, kümmern.

Die eingangs gestellte Aufgabe wird ferner bei einem Verfahren der eingangs beschriebenen Art nach Anspruch 26 dadurch gelöst, daß mit der Motorsteuerung ein Space-Vektor-Puls-Weiten-Modulations-(SVPWM)-Verfahren durchgeführt wird, bei welchem alle Motorwicklungen gleichzeitig bestromt werden, daß zur Steuer- und/oder Regelung einer Bestromung der mindestens zwei Motorwicklungen eine Rotorposition des Elektromotors bestimmt wird, daß zur Bestimmung der Rotorposition des Elektromotors mindestens eine der mindestens zwei Motorwicklungen für ein Zeitintervall t_{Unterbrechung} von einer Energieversorgung der Maschine getrennt wird, daß während des Zeitintervalls t_{Unterbrechung} die Gegen-EMK der mindestens einen der mindestens zwei Motorwicklungen gemessen wird und daß aus der gemessenen Gegen-EMK eine Ist-Position des Motors berechnet wird.

Das eingangs beschriebene Verfahren derart weiterzubilden hat den Vorteil, daß alle Motorwicklungen gleichzeitig bestromt werden können, wodurch sich ein Feldwinkel des durch die bestromten Motorwicklungen vorgebbaren Statorfeldes in gewünschter Weise stufenlos einstellen und variieren läßt. Insbesondere beim Anlaufen des Elektromotors und bei niedrigen Drehzahlen kann dadurch ein optimaler Betrieb und ein ruhiger Lauf des Elektromotors erreicht werden. Um eine Bestromung des Elektromotors in optimaler Weise vornehmen zu können, ist es vorteilhaft, wenn zur Steuer- und/oder Regelung einer Bestromung der mindestens zwei Motorwicklungen eine Rotorposition des Elektromotors bestimmt wird. Dies erlaubt es, in Abhängigkeit der Rotorposition die Motorwicklungen zu bestromen. So kann ein Feldwinkel des durch die bestromten Motorwicklungen erzeugten Statorfeldes optimal an die Rotorposition angepaßt werden, so daß ein ruhiger Betrieb und ein sanftes Anlaufen des Elektromotors sichergestellt werden können. Günstig ist es, daß zur Bestimmung der Rotorposition des Elektromotors mindestens eine der mindestens zwei Motorwicklungen für ein Zeitintervall t_{Unterbrechung} von einer Energieversorgung der Maschine getrennt wird, wenn während des Zeitintervalls t_{Unterbrechung} die Gegen-EMK der mindestens einen der mindestens zwei Motorwicklungen gemessen wird und wenn aus der gemessenen Gegen-EMK eine Ist-Position des Rotors berechnet wird. Da beim Space-Vektor-Puls-Weiten-Modulations-(SVPWM)-Verfahren normalerweise alle Motorwicklungen gleichzeitig bestromt werden, kann eine Gegen-EMK nur bestimmt werden, wenn die Bestromung mindestens einer Motorwicklung unterbrochen wird. Dann kann die aufgrund elektromagnetischer Induktion an der kurzzeitig unbestromten Motorwicklung abfallende Spannung als Gegen-EMK gemessen und aus deren Wert die Ist-Position des Rotors berechnet werden.

Vorteilhaft ist es, wenn die Motorsteuerung eine Steuerungseinheit und eine Leistungseinheit umfaßt.

Günstig ist es, wenn die Leistungseinheit jeweils zwei Leistungstransistoren für jede der mindestens zwei Motorwicklungen umfaßt. Dies gestattet es insbesondere, eine Gleichspannungsquelle als Energieversorgung zu verwenden.

Vorzugsweise kann vorgesehen sein, daß der Elektromotor ein bürstenloser Gleichstrommotor ist. Es wird so die Wartungsfreundlichkeit der chirurgischen Maschine verbessert.

Vorzugsweise werden alle Motorwicklungen gleichzeitig für das Zeitintervall t_{Unterbrechung} von der Energieversorgung der Maschine getrennt. Dies eröffnet die Möglichkeit, die Gegen-EMK an allen Motorwicklungen gleichzeitig zu bestimmen und auf diese Weise die Genauigkeit bei der Bestimmung der Ist-Position des Rotors zu verbessern.

Gemäß einer bevorzugten Variante des erfindungsgemäßen Verfahrens kann vorgesehen sein, daß die an den mindestens zwei Motorwicklungen anliegenden Spannungen vor oder zu Beginn des Zeitintervalls t_{Unterbrechung} oder vor der Messung der Gegen-EMK gemessen werden und daß diejenige Motorwicklung, an welcher die niedrigste Spannung gemessen wird, mit einem vorgegebenen Spannungspotential verbunden wird. Da grundsätzlich nicht die Gegen-EMK aller Motorwicklungen gemessen werden muß, um die Ist-Position des Rotors zu bestimmen, läßt sich durch die vorgeschlagene Weiterbildung des Verfahrens die Gegen-EMK besonders schnell bestimmen. Insbesondere wird so nämlich ein Einschwingvorgang optimiert und verkürzt.

Vorzugsweise ist das vorgegebene Spannungspotential Masse.

Um die Rotorposition noch genauer bestimmen zu können, ist es günstig, wenn die Gegen-EMK während des Zeitintervalls t_{Unterbrechung} erst nach einer Einschwingzeit t_{Einschwing} gemessen wird. Beispielsweise kann die Einschwingzeit direkt ab Beginn des Zeitintervalls t_{Unterbrechung} abgewartet werden. Durch das Abwarten der Einschwingzeit t_{Einschwing} kann vermieden werden, einen falschen Wert für die Gegen-EMK zu ermitteln, aus welchem sich wiederum eine falsche Ist-Position des Rotors ableiten würde.

Gemäß einer weiteren bevorzugten Variante des erfindungsgemäßen Verfahrens kann vorgesehen sein, daß zur Bestimmung der Gegen-EMK ein Spannungsverlauf an der oder den nicht mit dem vorgegebenen Spannungspotential verbundenen Motorwicklungen gemessen wird und daß die Einschwingzeit t_{Einschwing} mindestens einer Zeit tₖₒₙₛₜₐₙₜ entspricht, bis die an der oder den nicht mit dem vorgegebenen Spannungspotential verbundenen Motorwicklungen anliegenden Spannungen im Zeitverlauf konstant oder nahezu konstant sind. Die Bestimmung des Spannungsverlaufs an der oder den Motorwicklungen macht es möglich, die Gegen-EMK direkt nach dem Einschwingen zu bestimmen. Das Zeitintervall t_{Unterbrechung} kann auf diese Weise minimiert werden, was zu einer verbesserten Laufruhe und einer verbesserten Anlaufeigenschaft des Motors beiträgt.

Besonders einfach wird das erfindungsgemäße Verfahren, wenn ein konstanter Wert für das Zeitintervall t_{Unterbrechung} vorgegeben wird. Allerdings kann die Ist-Position wesentlich genauer bestimmt und zudem die Laufruhe des Elektromotors weiter verbessert werden, wenn das Zeitintervall t_{Unterbrechung} während des Betriebs der Maschine verändert wird. Insbesondere dann, wenn die Einschwingzeit t_{Einschwing} länger als das Zeitintervall t_{Unterbrechung} dauert, kann das Zeitintervall entsprechend an die Einschwingzeit angepaßt werden, so daß die Gegen-EMK innerhalb des Zeitintervalls t_{Unterbrechung} bestimmt werden kann.

Vorteilhaft ist es, wenn die Dauer des Zeitintervalls t_{Unterbrechung} derart vorgegeben wird, daß während des Zeitintervalls t_{Unterbrechung} die an der oder den nicht mit dem vorgegebenen Spannungspotential verbundenen Motorwicklungen anliegenden Spannungen im Zeitverlauf einen konstanten oder nahezu konstanten Spannungswert annehmen. So ist es möglich, die Gegen-EMK an jeder gewünschten Motorwicklung dann zu bestimmen, wenn nach Einschwingen des Systems induzierte Spannungen an der oder den Motorwicklungen konstant oder im wesentlichen konstant sind. Dies erhöht die Genauigkeit bei der Bestimmung der Rotorposition.

Vorzugsweise kann vorgesehen sein, daß das Zeitintervall t_{Unterbrechung} vergrößert wird, wenn die Zeit tₖₒₙₛₜₐₙₜ größer als das Zeitintervall t_{Unterbrechung} ist, und/oder daß das Zeitintervall t_{Unterbrechung} verkleinert wird, wenn die Zeit tₖₒₙₛₜₐₙₜ kleiner als das Zeitintervall t_{Unterbrechung} ist. Durch diese Vorgehensweise wird sichergestellt, daß das Zeitintervall t_{Unterbrechung} nie länger als benötigt ist. Dies stellt einen besonders ruhigen Motorlauf sicher.

Günstig ist es, wenn das Zeitintervall t_{Unterbrechung} periodisch schrittweise verändert wird. Insbesondere kann dies pro Umdrehung des Rotors durchgeführt werden oder mit einer Abtastfrequenz, die kleiner als die Modulationsfrequenz des Space-Vektor-Puls-Weiten-Modulations-(SVPWM)-Verfahren oder des Puls-Weiten-Modulations-(PWM)-Verfahren ist. Die schrittweise Veränderung kann insbesondere eine Vergrößerung oder Verkleinerung sein. Das erfindungsgemäße Verfahren so weiterzubilden ermöglicht eine kontinuierliche Anpassung des Zeitintervalls t_{Unterbrechung} an die tatsächlich erforderliche Unterbrechungszeit, um die Gegen-EMK an mindestens einer Motorwicklung in erforderlicher Weise zu messen.

Vorzugsweise werden nach Messung der Gegen-EMK alle Motorwicklungen wieder an die Energieversorgung der Maschine angeschlossen. Dies kann direkt oder mit Zeitverzögerung geschehen. Je schneller die Motorleitungen wieder an die Energieversorgung der Maschine angeschlossen werden, umso kürzer wird das Zeitintervall t_{Unterbrechung} und um so ruhiger ein Motorlauf.

Ferner kann es vorteilhaft sein, wenn eine Soll-Position des Rotors mit der aus der Gegen-EMK-Messung bestimmten Ist-Position des Rotors verglichen wird und wenn ein Feldwinkel der Space-Vektor-Puls-Weiten-Modulation (SVPWM) entsprechend der ermittelten Differenz zwischen Soll- und Ist-Position des Rotors nachgeregelt wird. Durch diese Nachregelung wird sichergestellt, daß die Bestromung des Elektromotors mit optimalem Wirkungsgrad geschieht.

Vorzugsweise wird die Gegen-EMK erst gemessen, wenn der Motorstrom mindestens einer der mindestens zwei Motorwicklungen auf Null abgefallen ist. Es lassen sich so Meßfehler bei der Bestimmung der Gegen-EMK auf einfache Weise vermeiden. Dies erhöht die Genauigkeit bei der Bestimmung der Rotorposition.

Vorteilhafterweise wird zur Energieversorgung der Maschine eine netzunabhängige Energieversorgung verwendet. Dies kann insbesondere eine Batterie oder ein Akkumulator sein. So läßt sich die Maschine kabellos betreiben. Gemäß einer weiteren bevorzugten Variante des erfindungsgemäßen Verfahrens kann vorgesehen sein, daß die netzunabhängige Energieversorgung und die Motorsteuerung eine Einheit bilden und daß die Einheit vor Inbetriebnahme der Maschine mit der Maschine verbunden wird. Auf diese Weise ist es möglich, die chirurgische Maschine von der Energieversorgung und der Motorsteuerung getrennt zu reinigen. Eine Einheit vorzusehen erleichtert zudem das Zusammenfügen und Vorbereiten der Maschine für einen chirurgischen Einsatz.

Um eine vorzeitige Entleerung, insbesondere eine Selbstentladung, der netzunabhängigen Energieversorgung zu vermeiden, ist es vorteilhaft, wenn ein Prozessor der Motorsteuerung erst mit der netzunabhängigen Energieversorgung verbunden wird, wenn der Elektromotor mit der Motorsteuerung verbunden ist. Üblicherweise haben Prozessoren von Motorsteuerungen einen im Vergleich zu anderen Bauteilen der Steuerung deutlich erhöhten Energieverbrauch. Eine Selbstentladung der netzunabhängigen Energieversorgung kann dadurch vermieden werden, da eine Aktivierung der Motorsteuerung erst nach Verbinden derselben mit dem Elektromotor möglich wird.

Besonders einfach läßt sich das erfindungsgemäße Verfahren durchführen, wenn ein Elektromotor mit drei Motorwicklungen verwendet wird.

Vorteilhafterweise kann vorgesehen sein, daß ein Gesamtdrehzahlbereich der chirurgischen Maschine in mindestens einen unteren Bereich für niedrige Drehzahlen und in mindestens einen oberen Drehzahlbereich für höhere Drehzahlen als der mindestens eine untere Drehzahlbereich unterteilt wird, und daß in dem mindestens einen unteren Drehzahlbereich das Space-Vektor-Puls-Weiten-Modulations-(SVPWM)-Verfahren durchgeführt wird. Das Space-Vektor-Puls-Weiten-Modulations-(SVPWM)-Verfahren ist besonders vorteilhaft für niedrige Drehzahlen, kann jedoch bei höheren Drehzahlen zu einer Dämpfung des Motors und damit zu einer Absenkung des Wirkungsgrads des Motors führen. Daher ist es vorteilhaft, im oberen Drehzahlbereich ein anderes Steuer- und/oder Regelungsverfahren zur Steuerung des Elektromotors vorzusehen.

Besonders vorteilhaft ist es, wenn im mindestens einen oberen Drehzahlbereich ein zweites Verfahren zum Steuern- und/oder Regeln der chirurgischen Maschine durchgeführt wird, welches ein Puls-Weiten-Modulations-(PWM)-Verfahren ist. Dieses Verfahren im oberen Drehzahlbereich durchzuführen, hat den Vorteil, daß ein unerwünschtes Dämpfen des Motors durch Anwendung des Space-Vektor-Puls-Weiten-Modulations-(SVPWM)-Verfahrens nicht auftreten kann. Mit anderen Worten wird durch die Durchführung von zwei unterschiedlichen Steuer- und/oder Regelungsverfahren der Wirkungsgrad des Elektromotors nahezu über den gesamten Drehzahlbereich verbessert.

Günstig ist es, wenn ein Drehzahlgrenzwert zwischen dem mindestens einen unteren und dem mindestens einen oberen Drehzahlbereich verändert wird. Je nach dem im oberen Drehzahlbereich angewandten Steuer- und/oder Regelungsverfahren kann eine Umschaltung zwischen beiden Verfahren bei einem anderen Drehzahlwert vorgenommen werden. Der Drehzahlgrenzwert wird vorzugsweise so gewählt, daß ein Wirkungsgrad beider Verfahren optimal ist.

Besonders vorteilhaft ist es, wenn eine Umschaltung vom Space-Vektor-Puls-Weiten-Modulations-(SVPWM)-Verfahren in das Puls-Weiten-Modulations-(PWM)-Verfahren bei einer ersten Umschaltdrehzahl erfolgt und wenn eine Umschaltung vom Puls-Weiten-Modulations-(PWM)-Verfahren in das Space-Vektor-Puls-Weiten-Modulations-(SVPWM)-Verfahren bei einer zweiten Umschaltdrehzahl erfolgt. Diese Weiterbildung des erfindungsgemäßen Verfahrens vermeidet, daß im Bereich eines Drehzahlgrenzwerts zwischen dem oberen und dem unteren Drehzahlbereich dauernd umgeschalten werden muß. Dadurch erhöht sich die Laufruhe des Motors deutlich.

Besonders günstig ist es, wenn die Umschaltung vom Space-Vektor-Puls-Weiten-Modulations-(SVPWM)-Verfahren in das Puls-Weiten-Modulations-(PWM)-Verfahren beim Übergang vom mindestens einen unteren in den mindestens einen oberen Drehzahlbereich, und umgekehrt, automatisch erfolgt. Dies bedeutet, daß eine Bedienperson nicht zwischen zwei unterschiedlichen Steuer- und/oder Regelungsverfahren manuell umschalten muß, sondern sich auf den Einsatz und die Bedienung der Maschine konzentrieren kann.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung einer chirurgischen Akkumaschine;
- Figur 2:: ein Prinzipschaltbild eines Drei-Phasen-Leistungsinverters;
- Figur 3:: ein Funktionsschema eines Drei-Phasen-Pulsweiten-Modulati- onsinverters;
- Figur 4:: eine Prinzipdarstellung einer trägerbasierten Pulsweiten-Modula- tion;
- Figur 5:: eine schematische Darstellung von acht Schaltzuständen bei der Space-Vektor-Puls-Weiten-Modulation;
- Figur 6:: eine schematische Darstellung des Spannungsvektorraums bei der Space-Vektor-Puls-Weiten-Modulation;
- Figur 7:: ein Ablaufdiagramm des erfindungsgemäßen Space-Vektor-Puls- Weiten-Modulations-(SVPWM)-Verfahrens zur Steuer- und/oder Regelung eines bürstenlosen Gleichstrommotors;
- Figur 8:: eine schematische Darstellung des Stromverlaufs in einer Motor- wicklung in Abhängigkeit der Zeit;
- Figur 9:: eine Darstellung des Stromverlaufs in Abschnitt A in Figur 8 mit zehnfach höherer zeitlicher Auflösung;
- Figur 10:: eine schematische Darstellung des Spannungsverlaufs einer Motorwicklung bezogen auf Masse der Energieversorgung;
- Figur 11:: der Spannungsverlauf aus Figur 10, jedoch mit zehnfach höherer zeitlicher Auflösung;
- Figur 12:: eine Prinzipskizze einer Akku-/Motorsteuerungseinheit;
- Figur 13:: ein Schaltdiagramm einer Motorsteuerung der in Figur 1 darge- stellten Akkumaschine; und
- Figur 14:: ein zum Schaltdiagramm in Figur 13 korrespondierender Ablauf- plan für einen Betrieb der in Figur 1 dargestellten Akkumaschine.

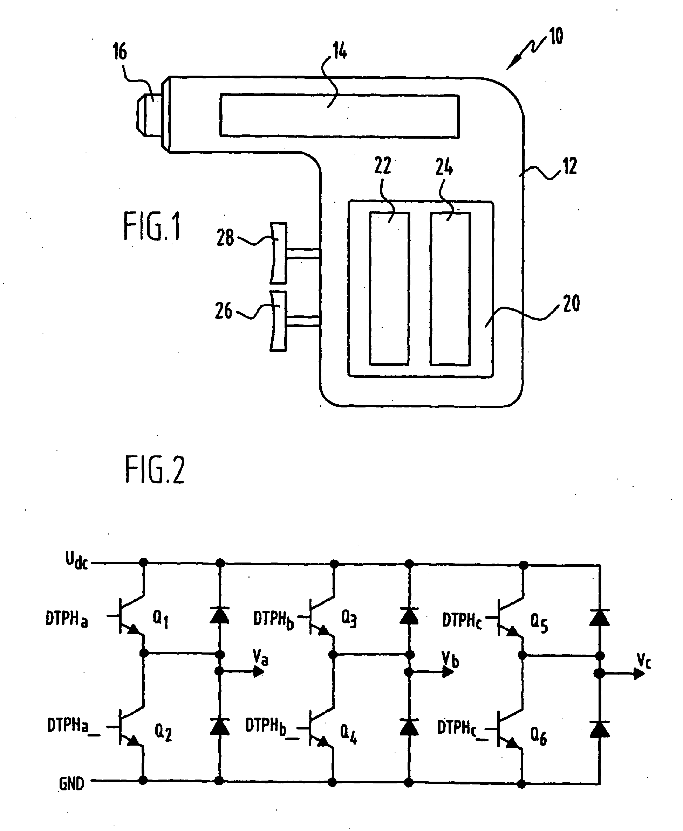

In Figur 1 ist eine insgesamt mit dem Bezugszeichen 10 versehene chirurgische Akkumaschine dargestellt, die ein Gehäuse 12 aufweist, in dessen einem Teil ein sensorloser Elektromotor 14 parallel zur Längsachse dieses Gehäuseteils angeordnet ist und eine nicht dargestellte Antriebswelle der Akkumaschine 10 antreibt. Am Ende der Antriebswelle ist eine Kupplung 16 angeordnet, mittels welcher die Akkumaschine mit Werkzeugen jedweder Art verbunden werden kann, beispielsweise Bohrern, Fräsen, Meißeln und auch Sägen.

Von dem den Elektromotor 14 aufnehmenden Gehäuseteiles des Gehäuses 12 steht quer ein Handgriff 18 ab, in welchen ein Powerpack 20 einführbar ist. Der Powerpack 20 umfaßt eine wiederaufladbare Batterie 22 sowie eine Motorsteuerung 24. Zur Inbetriebnahme der Akkumaschine 10 sind ein Gasdrücker 26 und ein Betrlebsmodi-Wahlschalter 28 vorgesehen, welche im wesentlichen parallel zu einer Längsachse des Elektromotors 14 in den Handgriff 18 hineingedrückt werden können.

Bei dem Elektromotor 14 handelt es sich um einen sensorlosen bürstenlosen Gleichstrommotor, das heißt, es sind keine Drehzahlerfassungssensoren zur Detektion einer Rotorbewegung und einer Position eines Rotormagneten, nachfolgend mit Rotor bezeichnet, des Elektromotors 14 vorgesehen.

In Figur 2 ist eine schematische Darstellung eines Drei-Phasen-Leistungsinverters dargestellt, wobei Vₐ, V_{b} und V_{c} die an die Motorwicklungen angelegten Spannungen repräsentieren. Insgesamt sechs Leistungstransistoren sind paarweise in Serie und als Paare jeweils parallel zueinander geschaltet und mit Q₁ bis Q₆ bezeichnet. In der Schaltungsskizze sind die Schaltzustände der jeweiligen Transistoren Q₁ bis Q₆ mit DTPHₓ bezeichnet, wobei x für a, b oder c steht. Üblicherweise wird der mit dem oberen Transistor in Serie geschaltete untere Transistor ausgeschaltet, wenn der obere Transistor angeschaltet wird, und umgekehrt.

Die in Figur 2 dargestellte Schaltskizze entspricht sowohl der herkömmlichen Puls-Weiten-Modulation (PWM) als auch der Space-Vektor-Puls-Weiten-Modulation (SVPWM). Allerdings unterscheiden sich die Schaltschemata beider Verfahren deutlich.

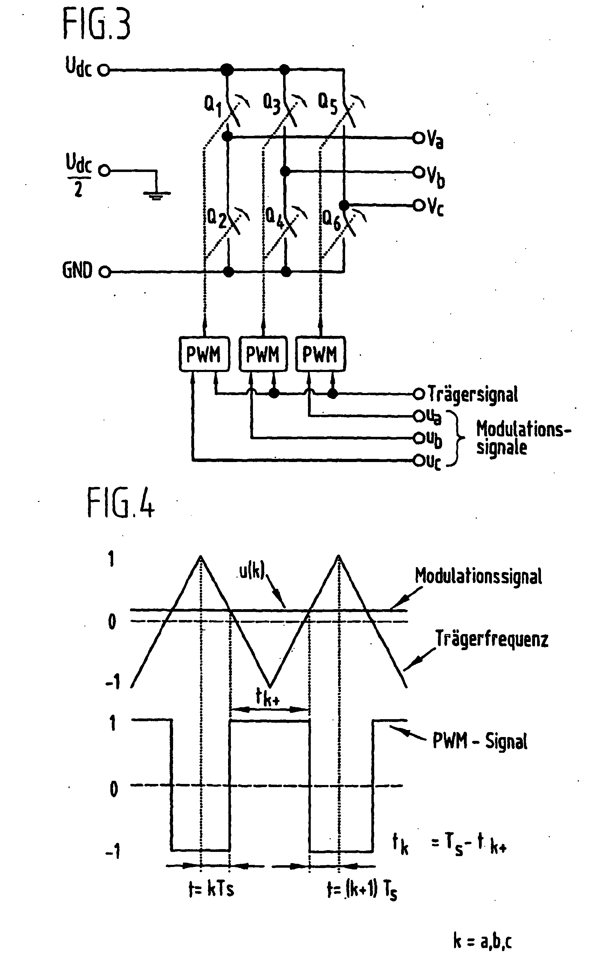

Beim herkömmlichen Puls-Weiten-Modulations-(PWM)-Verfahren, welches nachfolgend mit Bezug zu den Figuren 3 und 4 beschrieben wird, wird ein Modulationssignal jeder Motorwicklung a, b und c auf eine Trägerfrequenz aufmoduliert. Die Trägerfrequenz wird als periodischer Sägezahn gewählt, so daß sich das Puls-Weiten-Modulations-Signal dadurch ergibt, daß der Schaltzustand dann "1" ist, wenn das Trägerfrequenzsignals unterhalb des Modulationssignals liegt. Die Transistoren Q₁ bis Q₆ werden dann entsprechend geschaltet, wobei jeweils entweder der obere Transistor Q₁, Q₃ oder Q₅ oder der untere Transistor Q₂, Q₄ oder Q₆ durchgeschaltet wird. Es ist ohne weiteres verständlich, daß bei der in den Figuren 3 und 4 exemplarisch dargestellten herkömmlichen Puls-Weiten-Modulation (PWM) eines Drei-Phasen-Leistungsinverters stets mindestens eine Motorwicklung unbestromt bleibt. Dies ermöglicht eine Verstellung eines Feldwinkels γ des durch Bestromung der drei Motorwicklungen aufgebauten Statorfeldes nur in 60°-Schritten.

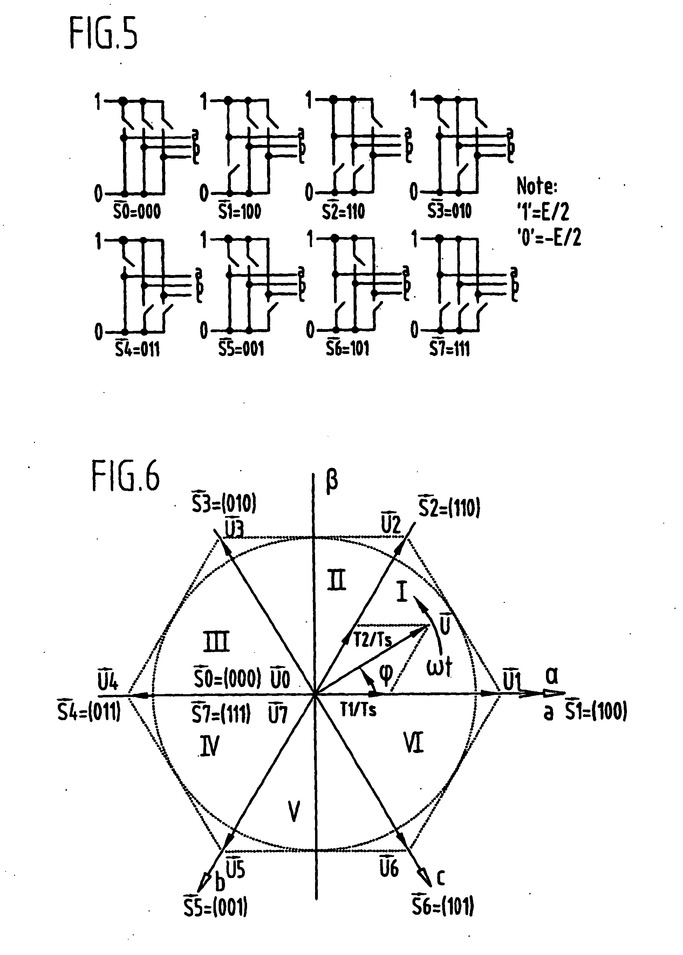

Hiervon unterscheidet sich das Space-Vektor-Puls-Weiten-Modulations-(SVPWM)-Verfahren. In Figur 5 ist schematisch das Schaltschema der sechs Transistoren dargestellt. Jeder Schaltstellung ist ein sogenannter Space-Vektor im Space-Vektor-Raum zugeordnet. So entspricht der Space-Vektor Sₒ einer Schaltstellung 000, bei welcher die drei unteren Transistoren Q₂, Q₄ und Q₆ geschlossen sind. Die in Figur 5 angegebenen Space-Vektoren definieren die Schaltstellung der in Serie geschalteten Transistorenpaare, wobei eine "0" bedeutet, daß der untere Transistor durchgeschaltet ist, und eine "1", daß der obere Transistor durchgeschaltet ist. Insgesamt gibt es acht Schaltzustände, die durch jeweils einen Spannungsvektor U₀ bis U₇ dargestellt werden können, weiche jeweils einem der acht Schaltzustände entsprechen. Jeder Spannungsvektor U₁ bis U₆ weist eine Länge auf, die einem Einheitsvektor entspricht, die Länge der Spannungsvektoren U₀ und U₇ dagegen ist Null. Somit unterteilen die sechs Spannungsvektoren U₁ bis U₆ den Spannungsvektorraum in insgesamt sechs Sektoren, wobei die Spannungsvektoren U₁ und U₄, U₂ und U₅ sowie U₃ und U₆ jeweils entgegengesetzt gerichtet sind und sich paarweise zum Nullvektor addieren.

Eine beliebige Ausgangsspannung U läßt sich nunmehr periodisch stufenlos variieren durch entsprechende Bestromung aller drei Motorwicklungen. Dadurch läßt sich also ein beliebiger Winkel γ des Statorfeldes relativ zum Rotor des Elektromotors einstellen, also nicht nur in 60°-Schritten wie bei der oben beschriebenen herkömmlichen Puls-Weiten-Modulation (PWM).

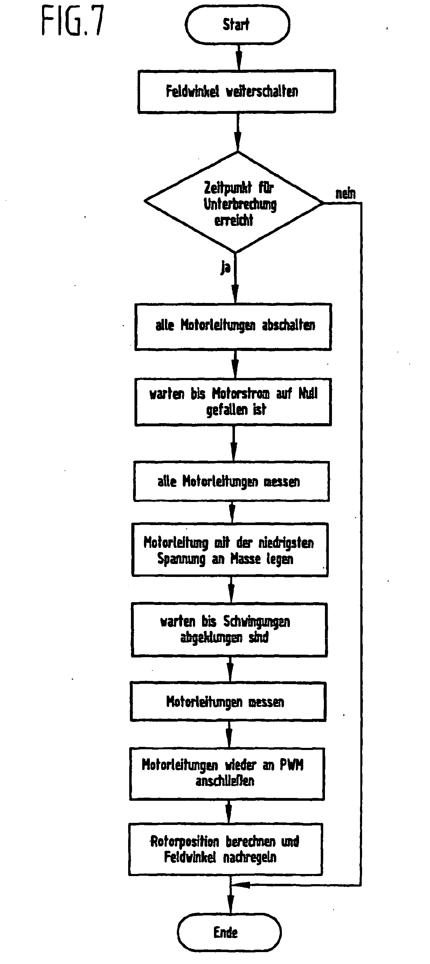

Allerdings kann bei der Space-Vektor-Puls-Weiten-Modulation (SVPWM) eine Gegen-EMK der Motorwicklungen nicht ohne weiteres bestimmt werden, da grundsätzlich alle Motorwicklungen gleichzeitig bestromt werden. Aus diesem Grund wird die Bestromung mindestens einer, vorzugsweise aller Motorleitungen kurzzeitig unterbrochen. Ein entsprechender Ablaufplan ist in Figur 7 dargestellt. Die Motorsteuerung gibt das Schaltschema der Space-Vektor-Puls-Weiten-Modulation (SVPWM) entsprechend einer gewünschten Drehzahlanforderung durch einen Bediener vor. Dies bedeutet, daß nach Aufnahme eines Betriebs der chirurgischen Maschine ein Feldwinkel γ des durch die bestromten Motorwicklungen erzeugten Statorfeldes kontinuierlich weitergeschaltet wird. Die in Figur 7 dargestellte Abfrageroutine wird bei jedem Puls-Weiten-Modulations-Impuls aufgerufen. Nach Start der Routine wird zunächst der Feldwinkel des Statorfeldes weitergeschaltet. Bei dieser Vorgehensweise wird mit zwei unterschiedlichen Frequenzen gearbeitet. Die Frequenz, mit welcher eine Bestromung des Motors unterbrochen wird, ist gleich oder kleiner als die Puls-Weiten-Modulations-Frequenz. Beispielsweise kann die Unterbrechungsfrequenz ein kHz betragen, bei einer Puls-Weiten-Modulations-Frequenz von acht kHz. Oder anders ausgedrückt, beträgt die Puls-Weiten-Modulations-Frequenz vorzugsweise ein Vielfaches, insbesondere ein ganzzahliges Vielfaches, der Unterbrechungs- oder Abtastfrequenz. Es kommt also zu einer Überlagerung von zwei Puls-Weiten-Modulations-Frequenzen. Mit anderen Worten bedeutet dies für das angegebene Zahlenbeispiel, daß alle acht Umdrehungen des Rotors die Motorleitungen kurzzeitig abgeschaltet werden.

Ist, wie in Figur 7 dargestellt, der Zeitpunkt für eine Unterbrechung der Bestromung erreicht, dann werden alle Motorleitungen abgeschaltet. In einem nächsten Schritt wird gewartet, bis der Motorstrom auf Null gefallen ist. Danach werden alle Motorleitungen beziehungsweise Motorwicklungen durchgemessen und diejenige Motorleitung mit der niedrigsten Spannung an Masse gelegt beziehungsweise mit Masse verbunden.

Als nächstes wird abgewartet, bis auftretende Schwingungen aufgrund der Schaltvorgänge abgeklungen sind. Danach werden alle Motorleitungen gemessen, das heißt an allen Motorleitungen wird gleichzeitig die Gegen-EMK bestimmt. Nach Abschluß der Messungen werden die Motorleitungen wieder entsprechend dem Space-Vektor-Puls-Weiten-Modulations-(SVPWM)-Verfahren bestromt. Mit den gemessenen Gegen-EMK-Werten wird die Rotorposition berechnet und der Feldwinkel γ entsprechend nachgeregelt, was durch eine entsprechende Anpassung des Space-Vektor-Puls-Weiten-Modulations-Schaltschemas geschieht.

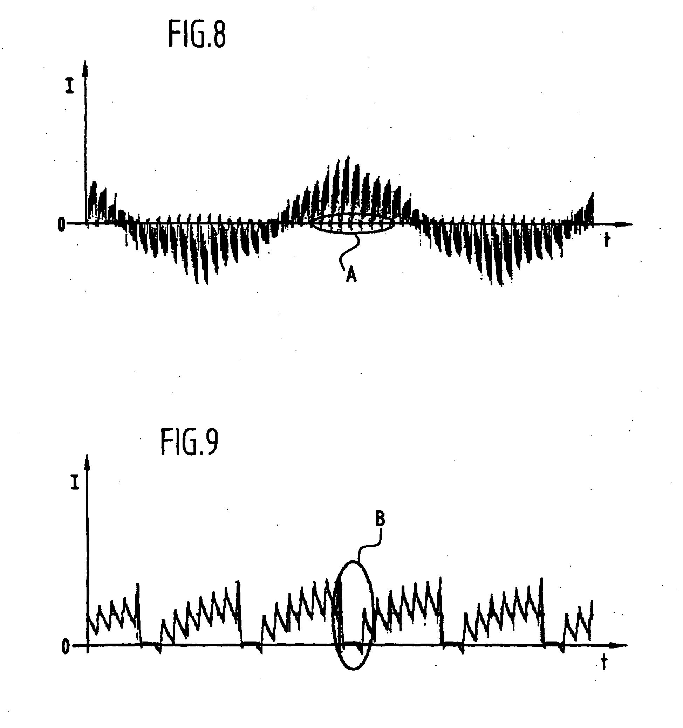

Durch die Space-Vektor-Puls-Weiten-Modulation läßt sich an jeder Motorleitung ein quasi sinusartiger Verlauf des Phasenstroms erzeugen. Der Phasenstrom an einer Motorleitung ist beispielhaft in Figur 8 für etwas mehr als eine Umdrehung des Rotors dargestellt. Die verschmierten Bereiche entstehen durch die Puls-Weiten-Modulation. In dem mit A markierten Bereich erkennt man periodische Unterbrechungen, in denen der Phasenstrom auf Null abfällt. Dies ist in Figur 9 zusätzlich vergrößert dargestellt, und zwar mit einer zehnfach höheren zeitlichen Auflösung. Man erkennt nun die in Figur 8 dargestellten dunklen Bereiche deutlicher. Periodisch, wie oben angegeben mit achtfach höherer Frequenz als die Unterbrechungsfrequenz, wird ein Puls-Weiten-Modulations-Signal erzeugt. Alle acht PMW-Pulse wird jedoch die Motorbestromung unterbrochen, das heißt der Phasenstrom fällt auf Null, was in dem mit B gekennzeichneten Bereich in Figur 9 gut zu erkennen ist.

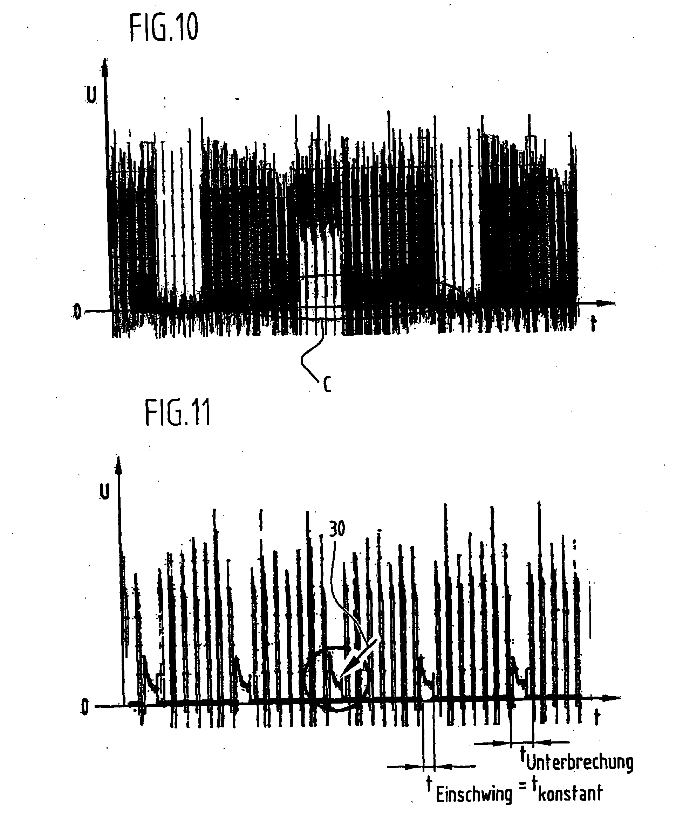

In den Figuren 10 und 11 ist ein Spannungsverlauf einer Motorwicklung bezogen auf die Masse der Batterie 22 dargestellt. Durch die Puls-Weiten-Modulation wird das Bild sehr stark verrauscht. In dem mit C gekennzeichneten Bereich ist in den Unterbrechungen der Puls-Weiten-Modulation eine sinusähnliche Gegen-EMK des Motors zur erkennen. In Figur 11 ist nochmals der Spannungsverlauf aus Figur 10, aber mit zehnfach höherer zeitlicher Auflösung, gezeigt. Man erkennt die durch Störspitzen überlagerte Puls-Weiten-Modulation.

In den bereits beschriebenen Unterbrechungen der Bestromung, also anstelle jedes achten Pulses, ist ein Spannungsverlauf der Gegen-EMK der Motorwicklung zu erkennen. Die Gegen-EMK, also die in der Motorwicklung aufgrund der Drehung des Rotors induzierte Spannung pendelt sich auf einen nach einer Einschwingzeit t_{Einschwing} in etwa konstanten Wert ein. Am Ende des Einschwingvorgangs kann die Gegen-EMK gemessen werden. Dies geschieht für alle drei Motorwicklungen in gleicher Weise und gleichzeitig, so daß aus den drei ermittelten Gegen-EMK-Werten sowohl eine Ist-Drehzahl des Elektromotors 14 als auch eine Rotationsstellung des Rotors des Elektromotors 14 berechnet werden kann.

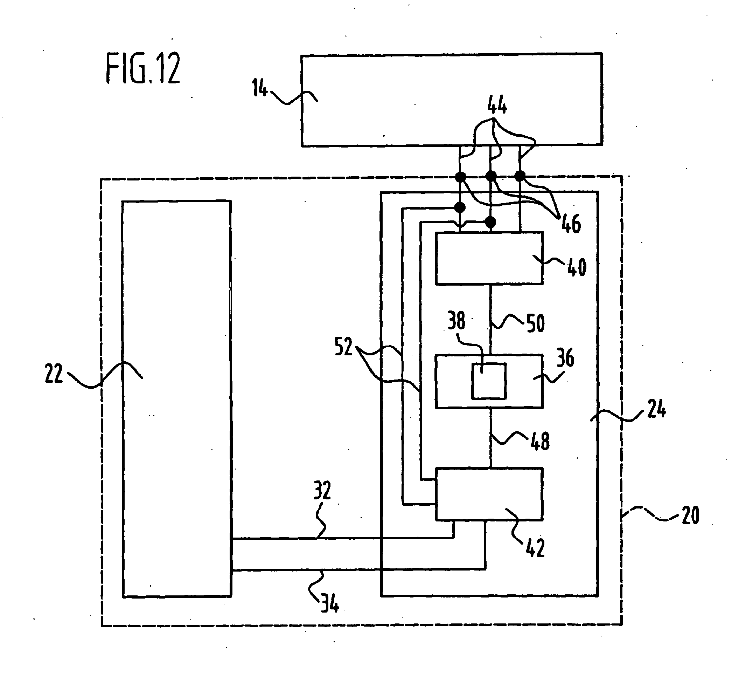

In Figur 12 ist schematisch der Aufbau des Batteriepacks 20 dargestellt. Wie bereits eingangs erwähnt, umfaßt er die Batterie 22 sowie die Motorsteuerung 24. Die Motorsteuerung 24 umfaßt unter anderem drei wesentliche Schaltungsbestandteile, nämlich eine Prozessoreinheit 36 mit einem digitalen Signalprozessor 38, eine Leistungsstufe 40 mit den sechs Leistungstransistoren Q₁ bis Q₆ sowie eine Unterbrechungsschalteinheit 42. Über zwei Leitungen 32 und 34 ist die Unterbrechungsschalteinheit 42 mit der Batterie 22 verbunden.

Ferner ist die Unterbrechungsschalteinheit mit zwei der drei Anschlußleitungen 44 des Elektromotors 14 verbunden. Die Anschlußleitungen 44 sind über drei Kontakte mit dem Powerpack 20 lösbar verbindbar. Ferner sind die Unterbrechungsschalteinheit 42 und die Prozessoreinheit 36 verbunden, was schematisch durch die Leitung 48 symbolisiert wird. Die Prozessoreinheit 36 ist mit der Leistungsstufe 40 verbunden, was schematisch durch die Leitung 50 symbolisiert wird.

Die Unterbrechungsschalteinheit dient dazu, den digitalen Signalprozessor 38 der Prozessoreinheit 36 von der Batterie 22 zu trennen, wenn der Powerpack 20 nicht mit dem Elektromotor 14 verbunden ist. Zu diesem Zweck ist die Unterbrechungsschalteinheit 42 über zwei Leitungen 52 mit zwei Kontaktstellen 46 des Batteriepacks 20 verbunden, die mit zwei Anschlußleitungen 44 des Elektromotors verbunden sind, wenn der Batteriepack 20 in den Handgriff 18 des Gehäuses 12 der Akkumaschine 10 eingeschoben wird. Erst nach Verbinden des Powerpacks 20 mit dem Elektromotor 14 schaltet die Unterbrechungsschalteinheit 42 die Prozessoreinheit 36 frei, das heißt, diese wird mit der Batterie 22 verbunden. Auf diese Weise wird eine Selbstentladung der Batterie 22 verhindert, denn die Prozessoreinheit 36, welche einen hohen Energieverbrauch hat, ist in einem Lagerzustand, also wenn der Batteriepack 20 nicht mit dem Elektromotor 14 verbunden ist, außer Funktion gesetzt.

Zur Bestimmung einer Ist-Drehzahl des Elektromotors 14 beziehungsweise zur Rotorpositionsdetektion können, wie eingangs beschrieben, prinzipiell Positionssensoren verwendet werden. Bei der erfindungsgemäß vorgeschlagenen Akkumaschine 10 wird jedoch gerade auf derartige Sensoren verzichtet. Eine Bestimmung der Drehzahl und der Rotorposition kann jedoch sehr genau mit Identifikationsverfahren ermittelt werden. Beispiele hierfür sind Luenberger-Beobachter oder Kalman-Filter. Da es sich bei dem digitalen Signalprozessor 38 um einen Prozessor mit einer sehr schnellen und hohen Rechenleistung handelt, kann eine Drehzahl beziehungsweise Rotorposition sehr genau detektiert werden.

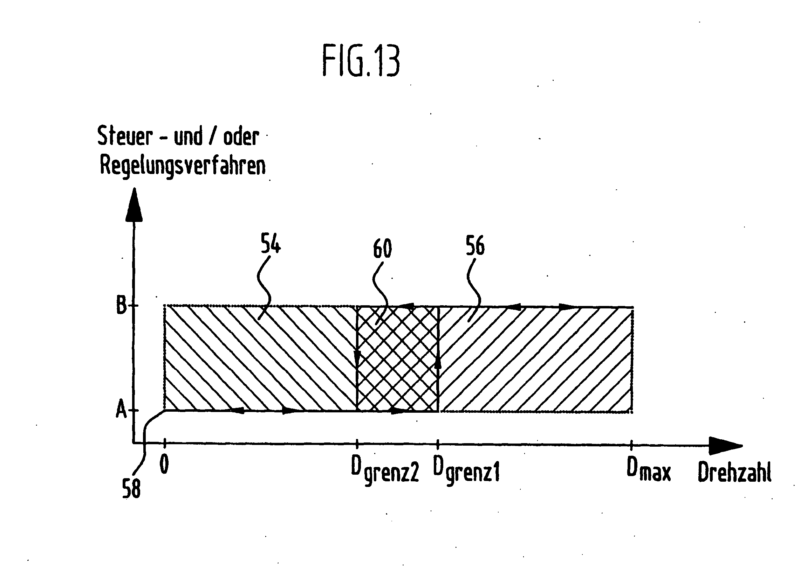

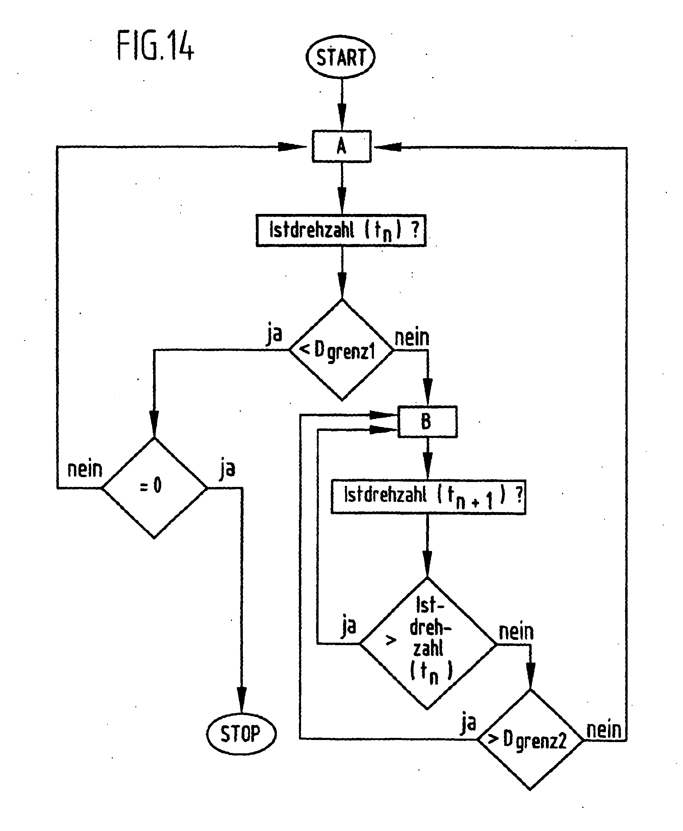

Die Motorsteuerung 24 ist derart ausgebildet, daß ein Drehzahlbereich des Elektromotors 14 in zwei Teilbereiche unterteilt wird, nämlich einen unteren Drehzahlbereich 54 und einen oberen Drehzahlbereich 56, wie dies in Figur 13 schematisch dargestellt ist. Des weiteren gestattet es die Motorsteuerung 24, zwei unterschiedliche Steuer- und/oder Regelungsverfahren zum Betreiben des Elektromotors 14 auszuführen. Dies ist zum einen ein Space-Vektor-Puls-Weiten-Modulations-(SVPWM)-Verfahren, welches in den Figuren 13 und 14 schematisch mit A bezeichnet ist. Zum anderen handelt es sich um ein herkömmliches Puls-Weiten-Moluations-(PWM)-Verfahren, welches in den Figuren 13 und 14 schematisch mit B gekennzeichnet ist.

Im Falle eines Elektromotors 14 mit einem Drehzahlerfassungssystem, welches Positionssensoren und Drehzahlerfassungssensoren aufweist, könnte das Steuer- und/oder Regelungsverfahren A auch ein Steuer- und/oder Regelungsverfahren sein, bei welchem eine Ist-Drehzahl des Elektromotors 14 mittels der Drehzahlerfassungssensoren ermittelt und von der Motorsteuerung 24 verarbeitet wird. Beim Space-Vektor-Puls-Weiten-Molulations-(SVPWM)-Verfahren und auch beim herkömmlichen Puls-Weiten-Modulations-(PWM)-Verfahren wird eine Ist-Drehzahl des Elektromotors 14 durch Bestimmung der Gegen-EMK ermittelt.

Mit Bezug zu den Figuren 13 und 14 wird nachfolgend die Vorgehensweise beim Umschalten vom Steuer- und/oder Regelungsverfahren A auf das Steuer- und/oder Regelungsverfahren B näher erläutert.

Betätigen des Gasdrückers 26 durch eine Bedienperson setzt die Akkumaschine 10 in Betrieb. In Figur 13 sind Start/Stop mit dem Bezugszeichen 58 versehen. Erhöht die Bedienperson die Drehzahl des Elektromotors 14, so führt die Motorsteuerung 24 das Steuer- und/oder Regelungsverfahren A aus bis zum Erreichen der Umschaltdrehzahl D_{grenz1}. Sobald die Umschaltdrehzahl D_{grenz1} erreicht ist, schaltet die Motorsteuerung 24 automatisch auf das Steuer- und/oder Regelungsverfahren B um. Bis zum Erreichen der Maximaldrehzahl Dₘₐₓ des Elektromotors 14 wird der Elektromotor 14 von der Motorsteuerung 24 im Steuer- und/oder Regelungsverfahren B betrieben. Wird die Drehzahlanforderung für den Elektromotor 14 durch die Bedienperson wieder herabgesetzt, so wird auch für Drehzahlen des Elektromotors 14, die kleiner sind als die Umschaltdrehzahl D_{grenz1} das Steuer- und/oder Regelungsverfahren B beibehalten, bis die Umschaltdrehzahl D_{grenz2} erreicht wird. Erst bei Erreichen der Umschaltdrehzahl D_{grenz2} und Unterschreiten derselben schaltet die Motorsteuerung 24 wieder auf das Steuer- und/oder Regelungsverfahren A um. Wird die Drehzahlanforderung wieder erhöht, dann erfolgt jedoch eine Umschaltung auf das Steuer- und/oder Regelungsverfahren B erst wieder nach Überschreiten der Umschaltdrehzahl D_{grenz1}.

Folge dieses Schaltschemas ist, daß in Figur 13 ein Überlappbereich zwischen dem unteren Drehzahlbereich 54 und dem oberen Drehzahlbereich 56 gebildet wird, der insgesamt mit dem Bezugszeichen 60 versehen ist. Im Überlappbereich 60 kann die Motorsteuerung 24 sowohl das Steuer- und/oder Regelungsverfahren A als auch das Steuer- und/oder Regelungsverfahren B ausführen. Welches Verfahren ausgeführt wird, hängt jedoch davon ab, ob die Drehzahtanforderung ausgehend von einer Ist-Drehzahl unterhalb der Umschaltdrehzahl D_{grenz2} erhöht oder von oberhalb der Umschaltdrehzahl D_{grenz1} abgesenkt wird. Insgesamt ergibt sich die in Figur 13 dargestellte hystereseartige Kurve, auf welcher der Überlappbereich 60 im Gegenuhrzeigersinn umwandert werden kann.

Die Funktionsweise der Motorsteuerung 24 zum Umschalten zwischen den beiden Steuer- und/oder Regelungsverfahren A und B wird anhand Figur 14 deutlich. Ausgangspunkt ist ein stillstehender Elektromotor 14. Wird dieser gestartet, so führt die Motorsteuerung 24 das Steuer- und/oder Regelungsverfahren A aus. Die Ist-Drehzahl zum Zeitpunkt tₙ wird in periodischen Abständen ermittelt. Nach Ermittlung der Ist-Drehzahl zum Zeitpunkt tₙ wird abgefragt, ob die Ist-Drehzahl kleiner als die Umschaltdrehzahl D_{grenz1}. Ist die Drehzahl kleiner als die Umschaltdrehzahl D_{grenz1}, dann wird abgefragt, ob die Drehzahl gleich 0 ist. Ist dies der Fall, dann stoppt die Motorsteuerung 24 den Betrieb des Elektromotors 14. Ist die Ist-Drehzahl kleiner als die Umschaltdrehzahl D_{grenz1}, jedoch größer als 0, dann wird weiter das Steuer- und/oder Regelungsverfahren A ausgeführt.

Ist die ermittelte Ist-Drehzahl zum Zeitpunkt tₙ größer als die Umschaltdrehzahl D_{grenz1}, dann schaltet die Motorsteuerung 24 auf das Steuer- und/oder Regelungsverfahren B um. Die Ist-Drehzahl zum Zeitpunkt tₙ₊₁ wird weiterhin in periodischen Abständen bestimmt und anschließend mit der zuvor bestimmten Ist-Drehzahl zum Zeitpunkt tₙ verglichen. Ist die Ist-Drehzahl zum Zeitpunkt tₙ₊₁ größer als die Ist-Drehzahl zum Zeitpunkt tₙ, dann führt die Motorsteuerung 24 weiterhin das Steuer- und/oder Regelungsverfahren B aus. Ist die Ist-Drehzahl zum Zeitpunkt tₙ₊₁ jedoch kleiner als die Ist-Drehzahl zum Zeitpunkt tₙ, dann wird die Ist-Drehzahl mit der Umschaltdrehzahl D_{grenz2} verglichen. Ist die Ist-Drehzahl größer als die Umschaltdrehzahl D_{grenz2} dann führt die Motorsteuerung weiterhin das Steuer- und/oder Regelungsverfahren B aus. Andernfalls schaltet die Motorsteuerung 24 automatisch auf das Steuer- und/oder Regelungsverfahren A um.

Das Umschalten zwischen den beiden Steuer- und/oder Regelungsverfahren A und B hat insbesondere den Vorteil, daß ein bei niedrigen Drehzahlen durchgeführtes Space-Vektor-Puls-Weiten-Modulations-(SVPWM)-Verfahren bei hohen Drehzahlen unerwünschte Dämpfungseffekte zeigt, wodurch sich Motorverluste ergeben und der Wirkungsgrad der Akkumaschine nachteilig beeinflußt wird.

Die beiden Steuer- und/oder Regelungsverfahren A und B können in der Motorsteuerung hardware- oder softwaremäßig implementiert sein.

## Patentansprüche

1. Chirurgische Maschine (10) mit einem sensorlosen Elektromotor (14), welcher einen Rotor und mindestens zwei Motorwicklungen aufweist, und mit einer Motorsteuerung (24) zum Steuern und/oder Regeln des Elektromotors (14), **dadurch gekennzeichnet, daß** mit der Motorsteuerung (24) ein Space-Vektor-Puls-Weiten-Modulations-(SVPWM)-Verfahren (A) zum Steuern und/oder Regeln des Elektromotors (14) durchgeführt wird, bei welchem alle Motorwicklungen gleichzeitig bestromt werden, daß zur Steuer- und/oder Regelung einer Bestromung der mindestens zwei Mo-, torwicklungen eine Rotorposition des Elektromotors (14) bestimmt wird, daß zur Bestimmung der Rotorposition des Elektromotors (14) mindestens eine der mindestens zwei Motorwicklungen für ein Zeitintervall (t_{Unterbrechung}) von einer Energieversorgung (22) der Maschine (10) getrennt wird, daß während des Zeitintervalls (t_{Unterbrechung}) eine Gegen-EMK der mindestens einen der mindestens zwei Motorwicklungen gemessen wird und daß aus der gemessenen Gegen-EMK eine Ist-Position des Rotors berechnet wird.

2. Maschine nach dem voranstehenden Anspruch, gekennzeichnet, daß die Motorsteuerung (24) eine Steuerungseinheit (36) und eine Leistungseinheit (40) umfaßt.

3. Maschine nach Anspruch 2, **dadurch gekennzeichnet, daß** die Leistungseinheit (40) jeweils zwei Leistungstransistoren (Q₁; Q₂; Q₃; Q₄; Q₅; Q₆) für jede der mindestens zwei Motorwicklungen umfaßt.

4. Maschine nach einem der voranstehenden Ansprüche, **dadurch gekennzeichnet, daß** der Elektromotor (14) ein elektronisch kommutierter bürstenloser Gleichstrommotor ist.

5. Maschine nach einem der voranstehenden Ansprüche, **dadurch gekennzeichnet, daß** alle Motorwicklungen gleichzeitig für das Zeitintervall (t_{Unterbrechung}) von der Energieversorgung (22) der Maschine (10) getrennt werden.

6. Maschine nach einem der voranstehenden Ansprüche, **dadurch gekennzeichnet, daß** die an den mindestens zwei Motorwicklungen anliegenden Spannungen vor oder zu Beginn des Zeitintervalls (t_{Unterbrechung}) oder vor der Messung der Gegen-EMK gemessen werden und daß diejenige Motorwicklung, an welcher die niedrigste Spannung gemessen wird, mit einem vorgegebenen Spannungspotential verbunden wird.

7. Maschine nach Anspruch 6, **dadurch gekennzeichnet, daß** das vorgegebene Spannungspotential Masse ist.

8. Maschine nach einem der voranstehenden Ansprüche, **dadurch gekennzeichnet, daß** die Motorsteuerung (24) derart ausgebildet ist, daß die Gegen-EMK während des Zeitintervalls (t_{Unterbrechung}) erst nach einer Einschwingzeit t_{Einschwing} gemessen wird.

9. Maschine nach einem der voranstehenden Ansprüche, **dadurch gekennzeichnet, daß** die Motorsteuerung (24) derart ausgebildet ist, daß zur Bestimmung der Gegen-EMK ein Spannungsverlauf an der oder den nicht mit dem vorgegebenen Spannungspotential verbundenen Motorwicklungen gemessen wird und daß die Einschwingzeit (t_{Einschwing}) mindestens einer Zeit (tₖₒₙₛₜₐₙₜ) entspricht, bis die an der oder den nicht mit dem vorgegebenen Spannungspotential verbundenen Motorwicklungen anliegenden Spannungen im Zeitverlauf konstant oder nahezu konstant sind.

10. Maschine nach einem der voranstehenden Ansprüche, **dadurch gekennzeichnet, daß** die Motorsteuerung (24) derart ausgebildet ist, daß ein konstanter Wert für das Zeitintervall (t_{Unterbrechung}) vorgegeben ist.

11. Maschine nach einem der voranstehenden Ansprüche, **dadurch gekennzeichnet, daß** die Motorsteuerung (24) derart ausgebildet ist, daß das Zeitintervall (t_{Unterbrechung}) verändert wird.

12. Maschine nach Anspruch 11, **dadurch gekennzeichnet, daß** die Motorsteuerung (24) derart ausgebildet ist, daß die Dauer des Zeitintervalls (t_{Unterbrechung}) derart vorgegeben wird, daß während des Zeitintervalls (t_{Unterbrechung}) die an der oder den nicht mit dem vorgegebenen Spannungspotential verbundenen Motorwicklungen anliegenden Spannungen im Zeitverlauf einen konstanten oder nahezu konstanten Spannungswert annehmen.

13. Maschine nach einem der Ansprüche 11 oder 12, **dadurch gekennzeichnet, daß** die Motorsteuerung (24) derart ausgebildet ist, daß das Zeitintervall (t_{Unterbrechung}) vergrößert wird, wenn die Zeit (tₖₒₙₛₜₐₙₜ) größer als das Zeitinterviall (t_{Unterbrechung}) ist, und/oder daß das Zeitintervall (t_{Unterbrechung}) verkleinert wird, wenn die Zeit tₖₒₙₛₜₐₙₜ kleiner als das Zeitintervall (t_{Unterbrechung}) ist.

14. Maschine nach einem der Ansprüche 11 bis 13, **dadurch gekennzeichnet, daß** die Motorsteuerung (24) derart ausgebildet ist, daß das Zeitintervall (t_{Unterbrechung}) pro Umdrehung schrittweise verändert wird, insbesondere vergrößert oder verkleinert wird.

15. Maschine nach einem der voranstehenden Ansprüche, **dadurch gekennzeichnet, daß** die Motorsteuerung (24) derart ausgebildet ist, daß eine Soll-Position des Rotors mit der aus der egen-EMK-Messung bestimmten Ist-Position des Rotors verglichen wird und daß ein Feldwinkel der Space-Vektor-Puls-Weiten-Modulation (SVPWM) entsprechend der ermittelten Differenz zwischen Soll- und Ist-Position des Rotors nachgeregelt wird.

16. Maschine nach einem der voranstehenden Ansprüche, **dadurch gekennzeichnet, daß** die Motorsteuerung (24) derart ausgebildet ist, daß die Gegen-EMK erst gemessen wird, wenn der Motorstrom mindestens einer der mindestens zwei Motorwicklungen auf Null abgefallen ist.

17. Maschine nach einem der voranstehenden Ansprüche, **dadurch gekennzeichnet, daß** eine netzunabhängige Energieversorgung (22) zur Energieversorgung der Maschine (10) vorgesehen ist, insbesondere eine Batterie.

18. Maschine nach Anspruch 17, **dadurch gekennzeichnet, daß** die netzunabhängige Energieversorgung (22) und die Motorsteuerung (24) eine Einheit (20) bilden und daß die Einheit (20) mit der Maschine (10) lösbar verbunden ist.

19. Maschine nach einem der Ansprüche 17 oder 18, **dadurch gekennzeichnet, daß** die Motorsteuerung (24) eine Verbindungsschaltung (42) umfaßt, die einen Prozessor (38) der Motorsteuerung (24) erst mit der netzunabhängigen Energieversorgung (22) verbindet, wenn der Elektromotor (14) mit der Motorsteuerung (24) verbunden ist.

20. Maschine nach einem der voranstehenden Ansprüche, **dadurch gekennzeichnet, daß** der Elektromotor (14) drei Motorwicklungen aufweist.

21. Maschine nach einem der voranstehenden Ansprüche, **dadurch gekennzeichnet, daß** ein Gesamtdrehzahlbereich (54, 56) der chirurgischen Maschine (10) in mindestens einen unteren Drehzahlbereich (54) für niedrige Drehzahlen und in mindestens einen oberen Drehzahlbereich (56) für höhere Drehzahlen als der mindestens eine untere Drehzahlbereich (54) unterteilt ist und die Motorsteuerung (24) derart ausgebildet ist, daß in dem mindestens einen unteren Drehzahlbereich (54) das Space-Vektor-Puls-Weiten-Modulations-(SVPWM)-Verfahren (A) durchgeführt wird.

22. Maschine nach Anspruch 21, **dadurch gekennzeichnet, daß** in dem mindestens einen oberen Drehzahlbereich (56) ein zweites Verfahren zum Steuern und/oder Regeln der chirurgischen Maschine (10) durchgeführt wird, welches ein Puls-Weiten-Modulations-(PWM)-Verfahren (B) ist.

23. Maschine nach einem der Ansprüche 21 oder 22, **dadurch gekennzeichnet, daß** ein Drehzahlgrenzwert (D_{grenz1}, D_{grenz2}) zwischen dem mindestens einen unteren und dem mindestens einen oberen Drehzahlbereich (54, 56) verändert wird.

24. Maschine einem der Ansprüche 21 bis 23, **dadurch gekennzeichnet, daß** die Motorsteuerung (24) derart ausgebildet ist, daß eine Umschaltung vom Space-Vektor-Puls-Weiten-Modulations-(SVPWM)-Verfahren (A) in das Puls-Weiten-Modulations-(PWM)-Verfahren (B) bei einer ersten Umschaltdrehzahl (D_{grenz1}) erfolgt und daß eine Umschaltung vom Puls-Weiten-Modulations-(PWM)-Verfahren (B) in das Space-Vektor-Puls-Weiten-Modulations-(SVPWM)-Verfahren (A) bei einer zweiten Umschaltdrehzahl (D_{grenz2}) erfolgt.

25. Maschine einem der Ansprüche 21 bis 24, **dadurch gekennzeichnet, daß** die Motorsteuerung (24) derart ausgebildet ist, daß die Umschaltung vom Space-Vektor-Puls-Weiten-Modulations-(SVPWM)-Verfahren (A) in das Puls-Weiten-Modulations-(PWM)-Verfahren (B) beim Übergang vom mindestens einen unteren in den mindestens einen oberen Drehzahlbereich (54, 56), und umgekehrt, automatisch erfolgt.

26. Verfahren zum Steuern und/oder Regeln einer chirurgischen Maschine mit einem sensorlosen Elektromotor, welcher einen Rotor und mindestens zwei Motorwicklungen aufweist, und mit einer Motorsteuerung zum Steuern und/oder Regeln des Elektromotors, **dadurch gekennzeichnet, daß** mit der Motorsteuerung ein Space-Vektor-Puls-Weiten-Modulations-(SVPWM)-Verfahren durchgeführt wird, bei welchem alle Motorwicklungen gleichzeitig bestromt werden, daß zur Steuer- und/oder Regelung einer Bestromung der mindestens zwei Motorwicklungen eine Rotorposition des Elektromotors bestimmt wird, daß zur Bestimmung der Rotorposition des Elektromotors mindestens eine der mindestens zwei Motorwicklungen für ein Zeitintervall (t_{Unterbrechung}) von einer Energieversorgung der Maschine getrennt wird, daß während des Zeitintervalls (t_{Unterbrechung}) die Gegen-EMK der mindestens einen der mindestens zwei Motorwicklungen gemessen wird und daß aus der gemessenen Gegen-EMK eine Ist-Position des Rotors berechnet wird.

27. Verfahren nach Anspruch 26, **dadurch gekennzeichnet, daß** die Motorsteuerung eine Steuerungseinheit und eine Leistungseinheit umfaßt.

28. Verfahren nach Anspruch 27, **dadurch gekennzeichnet, daß** die Leistungseinheit jeweils zwei Leistungstransistoren für jede der mindestens zwei Motorwicklungen umfaßt.

29. Verfahren nach einen der Ansprüche 26 bis 28, **dadurch gekennzeichnet, daß** der Elektromotor ein bürstenloser Gleichstrommotor ist.

30. Verfahren nach einem der Ansprüche 26 bis 29, **dadurch gekennzeichnet, daß** alle Motorwicklungen gleichzeitig für das Zeitintervall (t_{Unterbrechung}) von der Energieversorgung der Maschine getrennt werden.

31. Verfahren nach einem der Ansprüche 26 bis 30, **dadurch gekennzeichnet, daß** die an den mindestens zwei Motorwicklungen anliegenden Spannungen vor oder zu Beginn des Zeitintervalls (t_{Unterbrechung}) oder vor der Messung der Gegen-EMK gemessen werden und daß diejenige Motorwicklung, an welcher die niedrigste Spannung gemessen wird, mit einem vorgegebenen Spannungspotential verbunden wird.

32. Verfahren nach Anspruch 31, **dadurch gekennzeichnet, daß** das vorgegebene Spannungspotential Masse ist.

33. Verfahren nach einem der Ansprüche 26 bis 32, **dadurch gekennzeichnet, daß** die Gegen-EMK während des Zeitintervalls (t_{Unterbrechung}) erst nach einer Einschwingzeit (t_{Einschwing}) gemessen wird.

34. Verfahren nach einem der Ansprüche 26 bis 33, **dadurch gekennzeichnet, daß** zur Bestimmung der Gegen-EMK ein Spannungsverlauf an der oder den nicht mit dem vorgegebenen Spannungspotential verbundenen Motorwicklungen gemessen wird und daß die Einschwingzeit (t_{Einschwing}) mindestens einer Zeit (tₖₒₙₛₜₐₙₜ) entspricht, bis die an der oder den nicht mit dem vorgegebenen Spannungspotential verbundenen Motorwicklungen anliegenden Spannungen im Zeitverlauf konstant oder nahezu konstant sind.

35. Verfahren nach einem der Ansprüche 26 bis 34, **dadurch gekennzeichnet, daß** ein konstanter Wert für das Zeitintervall (t_{Unterbrechung}) vorgegeben wird.

36. Verfahren nach einem der Ansprüche 26 bis 35, **dadurch gekennzeichnet, daß** das Zeitintervall (t_{Unterbrechung}) während des Betriebs der Maschine verändert wird.

37. Verfahren nach Anspruch 36, **dadurch gekennzeichnet, daß** die Dauer des Zeitintervalls (t_{Unterbrechung}) derart vorgegeben wird, daß während des Zeitintervalls (t_{Unterbrechung}) die an der oder den nicht mit dem vorgegebenen Spannungspotential verbundenen Motorwicklungen anliegenden Spannungen im Zeitverlauf einen konstanten oder nahezu konstanten Spannungswert annehmen.

38. Verfahren nach einem der Ansprüche 36 oder 37, **dadurch gekennzeichnet, daß** das Zeitintervall (t_{Unterbrechung}) vergrößert wird, wenn die Zeit (tₖₒₙₛₜₐₙₜ)größer als das Zeitintervall (t_{Unterbrechung}) ist, und/oder daß das Zeitintervall (t_{Unterbrechung}) verkleinert wird, wenn die Zeit (tₖₒₙₛₜₐₙₜ) kleiner als das Zeitintervall (t_{Unterbrechung}) ist.

39. Verfahren nach einem der Ansprüche 36 bis 38, **dadurch gekennzeichnet, daß** das Zeitintervall (t_{Unterbrechung}) periodisch, insbesondere pro Umdrehung, schrittweise verändert wird, insbesondere vergrößert oder verkleinert.

40. Verfahren nach einem der Ansprüche 26 bis 39, **dadurch gekennzeichnet, daß** nach Messung der Gegen-EMK alle Motorwicklungen wieder an die Energieversorgung der Maschine angeschlossen werden.

41. Verfahren nach einem der Ansprüche 26 bis 40, **dadurch gekennzeichnet, daß** eine Soll-Position des Rotors mit der aus der Gegen-EMK-Messung bestimmten Ist-Position des Rotors verglichen wird und daß ein Feldwinkel der Space-Vektor-Puls-Weiten-Modulation (SVPWM) entsprechend der ermittelten Differenz zwischen Soll- und Ist-Position des Rotors nachgeregelt wird.

42. Verfahren nach einem der Ansprüche 26 bis 41, **dadurch gekennzeichnet, daß** die Gegen-EMK erst gemessen wird, wenn der Motorstrom mindestens einer der mindestens zwei Motorwicklungen auf Null abgefallen ist.

43. Verfahren nach einem der Ansprüche 26 bis 42, **dadurch gekennzeichnet, daß** eine netzunabhängige Energieversorgung zur Energieversorgung der Maschine verwendet wird, insbesondere eine Batterie.

44. Verfahren nach Anspruch 43, **dadurch gekennzeichnet, daß** die netzunabhängige Energieversorgung und die Motorsteuerung eine Einheit bilden und daß die Einheit vor Inbetriebnahme der Maschine mit der Maschine verbunden wird.

45. Verfahren nach einem der Ansprüche 43 oder 44, **dadurch gekennzeichnet, daß** ein Prozessor der Motorsteuerung erst mit der netzunabhängigen Energieversorgung verbunden wird, wenn der Elektromotor mit der Motorsteuerung verbunden ist.

46. Verfahren nach einem der Ansprüche 26 bis 45, **dadurch gekennzeichnet, daß** ein Elektromotor mit drei Motorwicklungen verwendet wird.

47. Verfahren nach einem der Ansprüche 26 bis 46, **dadurch gekennzeichnet, daß** ein Gesamtdrehzahlbereich der chirurgischen Maschine in mindestens einen unteren Drehzahlbereich für niedrige Drehzahlen und in mindestens einen oberen Drehzahlbereich für höhere Drehzahlen als der mindestens eine untere Drehzahlbereich unterteilt wird und daß in dem mindestens einen unteren Drehzahlbereich das Space-Vektor-Puls-Weiten-Modulations-(SVPWM)-Verfahren durchgeführt wird.

48. Verfahren nach Anspruch 47, **dadurch gekennzeichnet, daß** im mindestens einen oberen Drehzahlbereich ein zweites Verfahren zum Steuern und/oder Regeln der chirurgischen Maschine durchgeführt wird, welches ein Puls-Weiten-Modulations-(PWM)-Verfahren ist.

49. Verfahren nach einem der Ansprüche 47 oder 48, **dadurch gekennzeichnet, daß** ein Drehzahlgrenzwert zwischen dem mindestens einen unteren und dem mindestens einen oberen Drehzahlbereich verändert wird.

50. Verfahren nach einem der Ansprüche 47 bis 49, **dadurch gekennzeichnet, daß** eine Umschaltung vom Space-Vektor-Puls-Weiten-Modulations-(SVPWM)-Verfahren in das Puls-Weiten-Modulations-(PWM)-Verfahren bei einer ersten Umschaltdrehzahl erfolgt und daß eine Umschaltung vom Puls-Weiten-Modulations-(PWM)-Verfahren in das Space-Vektor-Puls-Weiten-Modulations-(SVPWM)-Verfahren bei einer zweiten Umschaltdrehzahl erfolgt.

51. Verfahren nach einem der Ansprüche 47 bis 50, **dadurch gekennzeichnet, daß** die Umschaltung vom Space-Vektor-Puls-Weiten-Modulations-(SVPWM)-Verfahren in das Puls-Weiten-Modulations-(PWM)-Verfahren beim Übergang vom mindestens einen unteren in den mindestens einen oberen Drehzahlbereich, und umgekehrt, automatisch erfolgt.

## Claims

1. Surgical machine (10) with a sensorless electric motor (14) comprising a rotor and at least two motor windings, and with a motor controller (24) for controlling and/or regulating the electric motor (14), **characterized in that** a space vector pulse width modulation (SVPWM) method (A) for controlling and/or regulating the electric motor (14), in which all motor windings are simultaneously supplied with electric current, is performed with the motor controller (24), **in that** a rotor position of the electric motor (14) is determined for controlling and/or regulating the supplying of the at least two motor windings with electric current, **in that** to determine the rotor position of the electric motor (14) at least one of the at least two motor windings is separated from a power supply (22) of the machine (10) for a time interval (tᵢₙₜₑᵣᵣᵤₚₜ), **in that** a CEMF (counterelectromotive force) of the at least one of the at least two motor windings is measured during the time interval (tᵢₙₜₑᵣᵣᵤₚₜ), and **in that** an actual position of the rotor is calculated from the measured CEMF (counterelectromotive force).

2. Machine in accordance with the preceding claim, **characterized in that** the motor controller (24) comprises a control unit (36) and a power unit (40).

3. Machine in accordance with claim 2, **characterized in that** the power unit (40) respectively comprises two power transistors (Q₁; Q₂; Q₃; Q₄; Q₅; Q₆) for each of the at least two motor windings.

4. Machine in accordance with any one of the preceding claims, **characterized in that** the electric motor (14) is an electronically commutated brushless DC motor.

5. Machine in accordance with any one of the preceding claims, **characterized in that** all motor windings are simultaneously separated from the power supply (22) of the machine (10) for the time interval (tᵢₙₜₑᵣᵣᵤₚₜ).

6. Machine in accordance with any one of the preceding claims, **characterized in that** the voltages applied to the at least two motor windings are measured before or at the start of the time interval (tᵢₙₜₑᵣᵣᵤₚₜ) or before the measuring of the CEMF (counterelectromotive force), and **in that** that motor winding at which the lowest voltage is measured is connected to a predetermined voltage potential.

7. Machine in accordance with claim 6, **characterized in that** the predetermined voltage potential is ground.

8. Machine in accordance with any one of the preceding claims, **characterized in that** the motor controller (24) is so designed that the CEMF (counterelectromotive force) during the time interval (tᵢₙₜₑᵣᵣᵤₚₜ) is not measured until after a transient time tₜᵣₐₙₛᵢₑₙₜ.

9. Machine in accordance with any one of the preceding claims, **characterized in that** the motor controller (24) is so designed that to determine the CEMF (counterelectromotive force), a voltage course is measured at the motor winding or motor windings not connected to the predetermined voltage potential, and **in that** the transient time (tₜᵣₐₙₛᵢₑₙₜ) corresponds at least to a time (t_{constant}) until the voltages applied to the motor winding or motor windings not connected to the predetermined voltage potential are constant or almost constant in the course of time.

10. Machine in accordance with any one of the preceding claims, **characterized in that** the motor controller (24) is so designed that a constant value is predetermined for the time interval (tᵢₙₜₑᵣᵣᵤₚₜ).

11. Machine in accordance with any one of the preceding claims, **characterized in that** the motor controller (24) is so designed that the time interval (tᵢₙₜₑᵣᵣᵤₚₜ) is altered.

12. Machine in accordance with claim 11, **characterized in that** the motor controller (24) is so designed that the duration of the time interval (tᵢₙₜₑᵣᵣᵤₚₜ) is predetermined such that during the time interval (tᵢₙₜₑᵣᵣᵤₚₜ) the voltages applied to the motor winding or motor windings not connected to the predetermined voltage potential assume a constant or almost constant voltage value in the course of time.

13. Machine in accordance with claim 11 or 12, **characterized in that** the motor controller (24) is so designed that the time interval (tᵢₙₜₑᵣᵣᵤₚₜ) is increased when the time (t_{constant}) is greater than the time interval (tᵢₙₜₑᵣᵣᵤₚₜ), and/or **in that** the time interval (tᵢₙₜₑᵣᵣᵤₚₜ) is reduced when the time (t_{constant}) is less than the time interval (tᵢₙₜₑᵣᵣᵤₚₜ).

14. Machine in accordance with any one of claims 11 to 13, **characterized in that** the motor controller (24) is so designed that the time interval (tᵢₙₜₑᵣᵣᵤₚₜ) is altered, in particular, increased or reduced, stepwise per revolution.

15. Machine in accordance with any one of the preceding claims, **characterized in that** the motor controller (24) is so designed that a specified position of the rotor is compared with the actual position of the rotor as determined from the CEMF (counterelectromotive force) measurement, and **in that** a field angle of the space vector pulse width modulation (SVPWM) is adjusted in accordance with the difference determined between specified position and actual position of the rotor.

16. Machine in accordance with any one of the preceding claims, **characterized in that** the motor controller (24) is so designed that the CEMF (counterelectromotive force) is only measured after the motor current of at least one of the at least two motor windings has dropped to zero.

17. Machine in accordance with any one of the preceding claims, **characterized in that** a mains-independent power supply (22) in particular, a battery, is provided for supplying the machine (10) with power.

18. Machine in accordance with claim 17, **characterized in that** the mains-independent power supply (22) and the motor controller (24) form a unit (20), and **in that** the unit (20) is detachably connected to the machine (10).

19. Machine in accordance with claim 17 or 18, **characterized in that** the motor controller (24) comprises a connection circuit (42), which does not connect a processor (38) of the motor controller (24) to the mains-independent power supply (22) until the electric motor (14) is connected to the motor controller (24).

20. Machine in accordance with any one of the preceding claims, **characterized in that** the electric motor (14) comprises three motor windings.

21. Machine in accordance with any one of the preceding claims, **characterized in that** an entire rotational speed range (54, 56) of the surgical machine (10) is divided into at least one lower rotational speed range (54) for low rotational speeds and at least one upper rotational speed range (56) for higher rotational speeds than those in the at least one lower rotational speed range (54), and **in that** the motor controller (24) is so designed that the space vector pulse width modulation (SVPWM) method (A) is performed in the at least one lower rotational speed range (54).

22. Machine in accordance with claim 21, **characterized in that** a second method for controlling and/or regulating the surgical machine (10), which is a pulse width modulation (PWM) method (B), is performed in the at least one upper rotational speed range (56).

23. Machine in accordance with claim 21 or 22, **characterized in that** a rotational speed limit value (Dₗᵢₘᵢₜ₁, Dₗᵢₘᵢₜ₂) between the at least one lower rotational speed range (54) and the at least one upper rotational speed range (56) is altered.

24. Machine in accordance with any one of claims 21 to 23, **characterized in that** the motor controller (24) is so designed that a switchover from the space vector pulse width modulation (SVPWM) method (A) to the pulse width modulation (PWM) method (B) takes place at a first switchover rotational speed (Dₗᵢₘᵢₜ₁), and **in that** a switchover from the pulse width modulation (PWM) method (B) to the space vector pulse width modulation (SVPWM) method (A) takes place at a second switchover rotational speed (Dₗᵢₘᵢₜ₂).

25. Machine in accordance with any one of claims 21 to 24, **characterized in that** the motor controller (24) is so designed that the switchover from the space vector pulse width modulation (SVPWM) method (A) to the pulse width modulation (PWM) method (B) takes place automatically at the transition from the at least one lower rotational speed range (54) to the at least one upper rotational speed range (56), and vice versa.

26. Method for controlling and/or regulating a surgical machine with a sensorless electric motor comprising a rotor and at least two motor windings, and with a motor controller for controlling and/or regulating the electric motor, **characterized in that** a space vector pulse width modulation (SVPWM) method, in which all motor windings are simultaneously supplied with electric current, is performed with the motor controller, **in that** a rotor position of the electric motor is determined for controlling and/or regulating the supplying of the at least two motor windings with electric current, **in that** to determine the rotor position of the electric motor, at least one of the at least two motor windings is separated from a power supply of the machine for a time interval (tᵢₙₜₑᵣᵣᵤₚₜ), **in that** the CEMF (counterelectromotive force) of the at least one of the at least two motor windings is measured during the time interval (tᵢₙₜₑᵣᵣᵤₚₜ), and **in that** an actual position of the rotor is calculated from the measured CEMF (counterelectromotive force).

27. Method in accordance with claim 26, **characterized in that** the motor controller comprises a control unit and a power unit.

28. Method in accordance with claim 27, **characterized in that** the power unit respectively comprises two power transistors for each of the at least two motor windings.

29. Method in accordance with any one of claims 26 to 28, **characterized in that** the electric motor is a brushless DC motor.

30. Method in accordance with any one of claims 26 to 29, **characterized in that** all motor windings are simultaneously separated from the power supply of the machine for the time interval (tᵢₙₜₑᵣᵣᵤₚₜ).

31. Method in accordance with any one of claims 26 to 30, **characterized in that** the voltages applied to the at least two motor windings are measured before or at the start of the time interval (tᵢₙₜₑᵣᵣᵤₚₜ) or before the measuring of the CEMF (counterelectromotive force), and **in that** that motor winding at which the lowest voltage is measured is connected to a predetermined voltage potential.

32. Method in accordance with claim 31, **characterized in that** the predetermined voltage potential is ground.

33. Method in accordance with any one of claims 26 to 32, **characterized in that** the CEMF (counterelectromotive force) during the time interval (tᵢₙₜₑᵣᵣᵤₚₜ) is not measured until after a transient time (tₜᵣₐₙₛᵢₑₙₜ).

34. Method in accordance with any one of claims 26 to 33, **characterized in that** to determine the CEMF (counterelectromotive force), a voltage course is measured at the motor winding or motor windings not connected to the predetermined voltage potential, and **in that** the transient time (tₜᵣₐₙₛᵢₑₙₜ) corresponds at least to a time (t_{constant}) until the voltages applied to the motor winding or motor windings not connected to the predetermined voltage potential are constant or almost constant in the course of time.

35. Method in accordance with any one of claims 26 to 34, **characterized in that** a constant value is predetermined for the time interval (tᵢₙₜₑᵣᵣᵤₚₜ).

36. Method in accordance with any one of claims 26 to 35, **characterized in that** the time interval (tᵢₙₜₑᵣᵣᵤₚₜ) is altered during operation of the machine.

37. Method in accordance with claim 36, **characterized in that** the duration of the time interval (tᵢₙₜₑᵣᵣᵤₚₜ) is predetermined such that during the time interval (tᵢₙₜₑᵣᵣᵤₚₜ) the voltages applied to the motor winding or motor windings not connected to the predetermined voltage potential assume a constant or almost constant voltage value in the course of time.

38. Method in accordance with claim 36 or 37, **characterized in that** the time interval (tᵢₙₜₑᵣᵣᵤₚₜ) is increased when the time (t_{constant}) is greater than the time interval (tᵢₙₜₑᵣᵣᵤₚₜ), and/or **in that** the time interval (tᵢₙₜₑᵣᵣᵤₚₜ) is reduced when the time (t_{constant}) is less than the time interval (tᵢₙₜₑᵣᵣᵤₚₜ).

39. Method in accordance with any one of claims 36 to 38, **characterized in that** the time interval (tᵢₙₜₑᵣᵣᵤₚₜ) is periodically altered, in particular, increased or reduced, stepwise, in particular, per revolution.

40. Method in accordance with any one of claims 26 to 39, **characterized in that** after measuring the CEMF (counterelectromotive force), all motor windings are reconnected to the power supply of the machine.

41. Method in accordance with any one of claims 26 to 40, **characterized in that** a specified position of the rotor is compared with the actual position of the rotor as determined from the measurement of the CEMF (counterelectromotive force), and **in that** a field angle of the space vector pulse width modulation (SVPWM) is adjusted in accordance with the difference determined between specified position and actual position of the rotor.

42. Method in accordance with any one of claims 26 to 41, **characterized in that** the CEMF (counterelectromotive force) is only measured after the motor current of at least one of the at least two motor windings has dropped to zero.

43. Method in accordance with any one of claims 26 to 42, **characterized in that** a mains-independent power supply, in particular, a battery, is used for supplying the machine with power.

44. Method in accordance with claim 43, **characterized in that** the mains-independent power supply and the motor controller form a unit, and **in that** the unit is connected to the machine before the machine is put into operation.

45. Method in accordance with claim 43 or 44, **characterized in that** a processor of the motor controller is not connected to the mains-independent power supply until the electric motor is connected to the motor controller.

46. Method in accordance with any one of claims 26 to 45, **characterized in that** an electric motor with three motor windings is used.

47. Method in accordance with any one of claims 26 to 46, **characterized in that** an entire rotational speed range of the surgical machine is divided into at least one lower rotational speed range for low rotational speeds and at least one upper rotational speed range for higher rotational speeds than those in the at least one lower rotational speed range, and **in that** the space vector pulse width modulation (SVPWM) method is performed in the at least one lower rotational speed range.

48. Method in accordance with claim 47, **characterized in that** a second method for controlling and/or regulating the surgical machine, which is a pulse width modulation (PWM) method, is performed in the at least one upper rotational speed range.

49. Method in accordance with claim 47 or 48, **characterized in that** a rotational speed limit value between the at least one lower rotational speed range and the at least one upper rotational speed range is altered.

50. Method in accordance with any one of claims 47 to 49, **characterized in that** a switchover from the space vector pulse width modulation (SVPWM) method to the pulse width modulation (PWM) method takes place at a first switchover rotational speed, and **in that** a switchover from the pulse width modulation (PWM) method to the space vector pulse width modulation (SVPWM) method takes place at a second switchover rotational speed.

51. Method in accordance with any one of claims 47 to 50, **characterized in that** the switchover from the space vector pulse width modulation (SVPWM) method to the pulse width modulation (PWM) method takes place automatically at the transition from the at least one lower rotational speed range to the at least one upper rotational speed range, and vice versa.

## Revendications

1. Machine chirurgicale (10) comprenant un moteur électrique (14) sans capteur, qui présente un rotor et au moins deux enroulements de moteur, la machine comprenant également une commande de moteur (24) pour commander et/ou réguler le moteur électrique (14), **caractérisée en ce qu'**à l'aide de la commande de moteur (24) est exécuté un procédé (A) de modulation de largeur d'impulsion du type vecteur spatial (SVPWM) pour commander et/ou réguler le moteur électrique (14) et pour lequel tous les enroulements de moteur sont alimentés en courant simultanément, **en ce que** pour la commande et/ou la régulation d'une alimentation en courant desdits au moins deux enroulements de moteur, on détermine une position de rotor du moteur électrique (14), **en ce que** pour la détermination de la position de rotor du moteur électrique (14), on isole ou sépare, pour un intervalle de temps (tᵢₙₜₑᵣᵣᵤₚₜᵢₒₙ), au moins l'un desdits au moins deux enroulements de moteur, d'une alimentation en énergie (22) de la machine (10), **en ce que** pendant l'intervalle de temps (tᵢₙₜₑᵣᵣᵤₚₜᵢₒₙ), on mesure une force contre-électromotrice dudit au moins un desdits au moins deux enroulements de moteur, et **en ce qu'**à partir de la force contre-électromotrice mesurée, on calcule une position réelle du rotor.

2. Machine selon la revendication précédente, **caractérisée en ce que** la commande de moteur (24) comprend une unité de commande (36) et une unité de puissance (40).

3. Machine selon la revendication 2, **caractérisée en ce que** l'unité de puissance (40) comprend respectivement deux transistors de puissance (Q1; Q2; Q3; Q4; Q5; Q6) pour chacun desdits au moins deux enroulements de moteur.

4. Machine selon l'une des revendications précédentes, **caractérisée en ce que** le moteur électrique (14) est un moteur à courant continu sans balais, à commutation électronique.

5. Machine selon l'une des revendications précédentes, **caractérisée en ce que** tous les enroulements de moteur sont simultanément isolés ou séparés, pour l'intervalle de temps (tᵢₙₜₑᵣᵣᵤₚₜᵢₒₙ), de l'alimentation en énergie (22) de la machine (10).

6. Machine selon l'une des revendications précédentes, **caractérisée en ce que** les tensions aux bornes desdits au moins deux enroulements de moteur sont mesurées avant ou au début de l'intervalle de temps (tᵢₙₜₑᵣᵣᵤₚₜᵢₒₙ) ou avant la mesure de la force contre-électromotrice, et **en ce que** l'enroulement de moteur au niveau duquel est mesurée la tension la plus basse, est relié à un potentiel de tension prédéterminé.

7. Machine selon la revendication 6, **caractérisée en ce que** le potentiel de tension prédéterminé est la masse.

8. Machine selon l'une des revendications précédentes, **caractérisée en ce que** la commande de moteur (24) est conçue de façon telle que la force contre-électromotrice ne soit mesurée, pendant l'intervalle de temps (tᵢₙₜₑᵣᵣᵤₚₜᵢₒₙ), qu'après un temps de réponse transitoire (t_{de réponse transitoire}).

9. Machine selon l'une des revendications précédentes, **caractérisée en ce que** la commande de moteur (24) est conçue de façon telle que, pour la détermination de la force contre-électromotrice, on mesure une loi de variation de tension au niveau de l'enroulement de moteur relié ou des enroulements de moteur non reliés au potentiel de tension prédéterminé, et que le temps de réponse transitoire (t_{de réponse transitoire}) corresponde au moins à un temps (t_{constant}), jusqu'à ce que les tensions aux bornes de l'enroulement de moteur relié ou des enroulements de moteur non reliés au potentiel de tension prédéterminé, soient constantes ou pratiquement constantes dans leur variation par rapport au temps.

10. Machine selon l'une des revendications précédentes, **caractérisée en ce que** la commande de moteur (24) est conçue de manière à ce que soit prescrite une valeur constante pour l'intervalle de temps (tᵢₙₜₑᵣᵣᵤₚₜᵢₒₙ).

11. Machine selon l'une des revendications précédentes, **caractérisée en ce que** la commande de moteur (24) est conçue de façon à ce que l'intervalle de temps (tᵢₙₜₑᵣᵣᵤₚₜᵢₒₙ) soit modifié.

12. Machine selon la revendication 11, **caractérisée en ce que** la commande de moteur (24) est conçue de façon telle que la durée de l'intervalle de temps (tᵢₙₜₑᵣᵣᵤₚₜᵢₒₙ) soit prescrite de manière à ce que pendant l'intervalle de temps (tᵢₙₜₑᵣᵣᵤₚₜᵢₒₙ), les tensions aux bornes de l'enroulement de moteur relié ou des enroulements de moteur non reliés au potentiel de tension prédéterminé, prennent une valeur de tension constante ou pratiquement constante dans leur variation par rapport au temps.

13. Machine selon l'une des revendications 12 ou 13, **caractérisée en ce que** la commande de moteur (24) est conçue de façon telle que l'intervalle de temps (tᵢₙₜₑᵣᵣᵤₚₜᵢₒₙ) soit augmenté lorsque le temps (t_{constant}) est plus grand que l'intervalle de temps (tᵢₙₜₑᵣᵣᵤₚₜᵢₒₙ), et/ou que l'intervalle de temps (tᵢₙₜₑᵣᵣᵤₚₜᵢₒₙ) soit diminué lorsque le temps (t_{constant}) est plus petit que l'intervalle de temps (tᵢₙₜₑᵣᵣᵤₚₜᵢₒₙ).

14. Machine selon l'une des revendications 11 à 13, **caractérisée en ce que** la commande de moteur (24) est conçue de façon telle que l'intervalle de temps (tᵢₙₜₑᵣᵣᵤₚₜᵢₒₙ) soit modifié pas à pas par tour, notamment augmenté ou diminué.

15. Machine selon l'une des revendications précédentes, **caractérisée en ce que** la commande de moteur (24) est conçue de façon telle qu'une position de consigne du rotor soit comparée à une position réelle du rotor déterminée à partir de la mesure de force contre-électromotrice, et qu'un angle de champ de la modulation de largeur d'impulsion du type vecteur spatial (SVPWM) soit rajusté par régulation, conformément à la différence déterminée entre la position de consigne et la position réelle du rotor.

16. Machine selon l'une des revendications précédentes, **caractérisée en ce que** la commande de moteur (24) est conçue de façon telle que la force contre-électromotrice ne soit mesurée que lorsque le courant du moteur de l'un au moins desdits au moins deux enroulements de moteur a chuté à zéro.

17. Machine selon l'une des revendications précédentes, **caractérisée en ce qu'**il est prévu une alimentation en énergie (22) indépendante du réseau, pour l'alimentation en énergie de la machine (10), notamment une batterie.

18. Machine selon la revendication 17, **caractérisée en ce que** l'alimentation en énergie (22) indépendante du réseau et la commande de moteur (24) forment une unité (20), et **en ce que** l'unité (20) est reliée de manière amovible à la machine (10).

19. Machine selon l'une des revendications 17 ou 18, **caractérisée en ce que** la commande de moteur (24) comprend un circuit de liaison (42) qui ne relie un processeur (38) de la commande de moteur (24) à l'alimentation en énergie (22) indépendante du réseau, qu'une fois que le moteur électrique (14) est relié à la commande de moteur (24).

20. Machine selon l'une des revendications précédentes, **caractérisée en ce que** le moteur électrique (14) comporte trois enroulements de moteur.

21. Machine selon l'une des revendications précédentes, **caractérisée en ce qu'**une plage de vitesse de rotation globale (54, 56) de la machine chirurgicale (10) est subdivisée en au moins une plage de vitesse de rotation inférieure (54) pour de faibles vitesses de rotation, et au moins une plage de vitesse de rotation supérieure (56) pour des vitesses de rotation supérieures à celles de ladite au moins une plage de vitesse de rotation inférieure (54), et la commande de moteur (24) est conçue de façon à ce que le procédé (A) de modulation de largeur d'impulsion du type vecteur spatial (SVPWM) soit exécuté dans ladite au moins une plage de vitesse de rotation inférieure (54).

22. Machine selon la revendication 21, **caractérisée en ce que** dans ladite au moins une plage de vitesse de rotation supérieure (56) est exécuté un deuxième procédé pour commander et/ou réguler la machine chirurgicale (10), qui est un procédé (B) de modulation de largeur d' impulsion (PWM).

23. Machine selon l'une des revendications 21 ou 22, **caractérisée en ce que** l'on modifie une valeur limite de vitesse de rotation (Dₗᵢₘᵢₜₑ₁, Dₗᵢₘᵢₜₑ₂) entre ladite au moins une plage de vitesse de rotation inférieure et ladite au moins une plage de vitesse de rotation supérieure (54, 56).

24. Machine selon l'une des revendications 21 à 23, **caractérisée en ce que** la commande de moteur (24) est conçue de façon telle, qu'une commutation du procédé (A) de modulation de largeur d'impulsion du type vecteur spatial (SVPWM) au procédé (B) de modulation de largeur d'impulsion (PWM) s'effectue pour une première vitesse de rotation de commutation (Dₗᵢₘᵢₜₑ₁), et qu'une commutation du procédé (B) de modulation de largeur d'impulsion (PWM) au procédé (A) de modulation de largeur d'impulsion du type vecteur spatial (SVPWM) s'effectue pour une deuxième vitesse de rotation de commutation (Dₗᵢₘᵢₜₑ₂).

25. Machine selon l'une des revendications 21 à 24, **caractérisée en ce que** la commande de moteur (24) est conçue de façon telle, que la commutation du procédé (A) de modulation de largeur d'impulsion du type vecteur spatial (SVPWM) au procédé (B) de modulation de largeur d'impulsion (PWM) lors du passage de ladite au moins une plage de vitesse de rotation inférieure à ladite au moins une plage de vitesse de rotation supérieure (54, 56), et inversement, s'effectue automatiquement.

26. Procédé pour commander et/ou réguler une machine chirurgicale comprenant un moteur électrique sans capteur, qui présente un rotor et au moins deux enroulements de moteur, et comprenant également une commande de moteur pour commander et/ou réguler le moteur électrique, **caractérisé en ce qu'**à l'aide de la commande de moteur est exécuté un procédé de modulation de largeur d'impulsion du type vecteur spatial (SVPWM) pour commander et/ou réguler le moteur électrique et pour lequel tous les enroulements de moteur sont alimentés en courant simultanément, **en ce que** pour la commande et/ou la régulation d'une alimentation en courant desdits au moins deux enroulements de moteur, on détermine une position de rotor du moteur électrique, **en ce que** pour la détermination de la position de rotor du moteur électrique, on isole ou sépare, pour un intervalle de temps (tᵢₙₜₑᵣᵣᵤₚₜᵢₒₙ), au moins l'un desdits au moins deux enroulements de moteur, d'une alimentation en énergie de la machine, **en ce que** pendant l'intervalle de temps (tᵢₙₜₑᵣᵣᵤₚₜᵢₒₙ), on mesure une force contre-électromotrice dudit au moins un desdits au moins deux enroulements de moteur, et **en ce qu'**à partir de la force contre-électromotrice mesurée, on calcule une position réelle du rotor.

27. Procédé selon la revendication 26, **caractérisé en ce que** la commande de moteur comprend une unité de commande et une unité de puissance.

28. Procédé selon la revendication 27, **caractérisé en ce que** l'unité de puissance comprend respectivement deux transistors de puissance pour chacun desdits au moins deux enroulements de moteur.

29. Procédé selon l'une des revendications 26 à 28, **caractérisé en ce que** le moteur électrique est un moteur à courant continu sans balais.

30. Procédé selon l'une des revendications 26 à 29, **caractérisé en ce que** tous les enroulements de moteur sont simultanément isolés ou séparés, pour l'intervalle de temps (tᵢₙₜₑᵣᵣᵤₚₜᵢₒₙ), de l'alimentation en énergie de la machine.

31. Procédé selon l'une des revendications 26 à 30, **caractérisé en ce que** les tensions aux bornes desdits au moins deux enroulements de moteur sont mesurées avant ou au début de l'intervalle de temps (tᵢₙₜₑᵣᵣᵤₚₜᵢₒₙ) ou avant la mesure de la force contre-électromotrice, et **en ce que** l'enroulement de moteur au niveau duquel est mesurée la tension la plus basse, est relié à un potentiel de tension prédéterminé.

32. Procédé selon la revendication 31, **caractérisé en ce que** le potentiel de tension prédéterminé est la masse.

33. Procédé selon l'une des revendications 26 à 32, **caractérisé en ce que** la force contre-électromotrice n'est mesurée, pendant l'intervalle de temps (tᵢₙₜₑᵣᵣᵤₚₜᵢₒₙ), qu'après un temps de réponse transitoire (t_{de réponse transitoire}).

34. Procédé selon l'une des revendications 26 à 33, **caractérisé en ce que** pour la détermination de la force contre-électromotrice, on mesure une loi de variation de tension au niveau de l'enroulement de moteur relié ou des enroulements de moteur non reliés au potentiel de tension prédéterminé, et **en ce que** le temps de réponse transitoire (t_{de réponse transitoire}) correspond au moins à un temps (t_{constant}), jusqu'à ce que les tensions aux bornes de l'enroulement de moteur relié ou des enroulements de moteur non reliés au potentiel de tension prédéterminé, soient constantes ou pratiquement constantes dans leur variation par rapport au temps.

35. Procédé selon l'une des revendications 26 à 34, **caractérisé en ce que** l'on prescrit une valeur constante pour l'intervalle de temps (tᵢₙₜₑᵣᵣᵤₚₜᵢₒₙ).

36. Procédé selon l'une des revendications 26 à 35, **caractérisé en ce que** l'on modifie l'intervalle de temps (tᵢₙₜₑᵣᵣᵤₚₜᵢₒₙ) pendant le fonctionnement de la machine.

37. Procédé selon la revendication 36, **caractérisé en ce que** la durée de l'intervalle de temps (tᵢₙₜₑᵣᵣᵤₚₜᵢₒₙ) est prescrite de manière à ce que pendant l'intervalle de temps (tᵢₙₜₑᵣᵣᵤₚₜᵢₒₙ) les tensions aux bornes de l'enroulement de moteur relié ou des enroulements de moteur non reliés au potentiel de tension prédéterminé, prennent une valeur de tension constante ou pratiquement constante dans leur variation par rapport au temps.

38. Procédé selon l'une des revendications 36 ou 37, **caractérisé en ce que** l'intervalle de temps (tᵢₙₜₑᵣᵣᵤₚₜᵢₒₙ) est augmenté lorsque le temps (t_{constant}) est plus grand que l'intervalle de temps (tᵢₙₜₑᵣᵣᵤₚₜᵢₒₙ), et/ou **en ce que** l'intervalle de temps (tᵢₙₜₑᵣᵣᵤₚₜᵢₒₙ) est diminué lorsque le temps (t_{constant}) est plus petit que l'intervalle de temps (tᵢₙₜₑᵣᵣᵤₚₜᵢₒₙ).

39. Procédé selon l'une des revendications 36 à 38, **caractérisé en ce que** l'intervalle de temps (tᵢₙₜₑᵣᵣᵤₚₜᵢₒₙ) est modifié pas à pas périodiquement, notamment par tour, en particulier augmenté ou diminué.

40. Procédé selon l'une des revendications 26 à 39, **caractérisé en ce qu'**après la mesure de la force contre-électromotrice, tous les conducteurs de moteur sont à nouveau raccordés à l'alimentation en énergie de la machine.

41. Procédé selon l'une des revendications 26 à 40, **caractérisé en ce que** l'on compare une position de consigne du rotor à une position réelle du rotor déterminée à partir de la mesure de force contre-électromotrice, et **en ce que** l'on rajuste par régulation un angle de champ de la modulation de largeur d'impulsion du type vecteur spatial (SVPWM), conformément à la différence déterminée entre la position de consigne et la position réelle du rotor.

42. Procédé selon l'une des revendications 26 à 41, **caractérisé en ce que** la force contre-électromotrice n'est mesurée que lorsque le courant du moteur de l'un au moins desdits au moins deux enroulements de moteur a chuté à zéro.

43. Procédé selon l'une des revendications 26 à 42, **caractérisé en ce que** l'on utilise une alimentation en énergie indépendante du réseau, pour l'alimentation en énergie de la machine, notamment une batterie.

44. Procédé selon la revendication 43, **caractérisé en ce que** l'alimentation en énergie indépendante du réseau et la commande de moteur forment une unité, et **en ce que** l'on relie l'unité à la machine avant la mise en service de la machine.

45. Procédé selon l'une des revendications 43 ou 44, **caractérisé en ce qu'**un processeur de la commande de moteur n'est relié à l'alimentation en énergie indépendante du réseau, qu'une fois que le moteur électrique est relié à la commande de moteur.

46. Procédé selon l'une des revendications 26 à 45, **caractérisé en ce que** l'on utilise un moteur électrique à trois enroulements de moteur.

47. Procédé selon l'une des revendications 26 à 46, **caractérisé en ce qu'**une plage de vitesse de rotation globale de la machine chirurgicale est subdivisée en au moins une plage de vitesse de rotation inférieure pour de faibles vitesses de rotation, et au moins une plage de vitesse de rotation supérieure pour des vitesses de rotation supérieures à celles de ladite au moins une plage de vitesse de rotation inférieure, et **en ce que** l'on exécute le procédé de modulation de largeur d'impulsion du type vecteur spatial (SVPWM) dans ladite au moins une plage de vitesse de rotation inférieure.

48. Procédé selon la revendication 47, **caractérisé en ce que** dans ladite au moins une page de vitesse de rotation supérieure on exécute un deuxième procédé pour commander et/ou réguler la machine chirurgicale, qui est un procédé de modulation de largeur d'impulsion (PWM).

49. Procédé selon l'une des revendications 47 ou 48, **caractérisé en ce que** l'on modifie une valeur limite de vitesse de rotation entre ladite au moins une plage de vitesse de rotation inférieure et ladite au moins une plage de vitesse de rotation supérieure.

50. Procédé selon l'une des revendications 47 à 49, **caractérisé en ce qu'**une commutation du procédé de modulation de largeur d'impulsion du type vecteur spatial (SVPWM) au procédé de modulation de largeur d'impulsion (PWM) s'effectue pour une première vitesse de rotation de commutation, et **en ce qu'**une commutation du procédé de modulation de largeur d'impulsion (PWM) au procédé de modulation de largeur d'impulsion du type vecteur spatial (SVPWM) s'effectue pour une deuxième vitesse de rotation de commutation.

51. Procédé selon l'une des revendications 47 à 50, **caractérisé en ce que** la commutation du procédé de modulation de largeur d'impulsion du type vecteur spatial (SVPWM) au procédé de modulation de largeur d'impulsion (PWM) lors du passage de ladite au moins une plage de vitesse de rotation inférieure à ladite au moins une plage de vitesse de rotation supérieure, et inversement, s'effectue automatiquement.
